# EUROPEAN PATENT APPLICATION

(11) **EP 4 746 477 A1**
(43) Date of publication of application: **20.05.2026**
(21) Application number: 24850831.9
(22) Date of filing: 29.07.2024
(51) Int. Cl.: H04W 12/06

(54) **COMMUNICATION METHOD AND COMMUNICATION APPARATUS**

(30) Priority: 04.08.2023 CN 202310980906
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN); CHEN, Jun, Shenzhen, Guangdong 518129 (CN); LIU, Wenfeng, Shenzhen, Guangdong 518129 (CN)
(74) Representative: Epping - Hermann - Fischer
(86) International application number: PCT/CN2024/108070
(87) International publication number: WO 2025/031182

(57) **Abstract**

This application provides a communication method and a communication apparatus, and is applied to a scenario in which a terminal device registers with a home network separately via a first mobility management function network element and a second mobility management function network element. The method includes: A home network element sends an authentication notification to the first mobility management function network element when determining that primary authentication needs to be performed on the terminal device, where the authentication notification is for requesting to perform primary authentication on the terminal device. The home network element sends an authentication notification to the second mobility management function network element when determining that the first mobility management function network element is incapable of performing primary authentication on the terminal device, where the authentication notification is for requesting to perform primary authentication on the terminal device. When determining that the second mobility management function network element is capable of performing primary authentication on the terminal device, the home network element sends, to the first mobility management function network element, a notification message indicating to delete a first pending flag, to avoid re-triggering primary authentication on the terminal device when the terminal device subsequently accesses the first mobility management function network element again. This reduces signaling overheads.

## Description

This application claims priority to Chinese Patent Application No. 202310980906.3, filed with the China National Intellectual Property Administration on August 4, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In communication systems such as a 5th generation (5th generation, 5G) system, to ensure network security, a primary authentication (primary authentication) procedure needs to be performed on a terminal device that accesses a network, to be specific, authentication and authorization need to be performed on the terminal device. The terminal device can access the network only after the authentication succeeds, and further requests to establish a protocol data unit (protocol data unit, PDU) session to access various services in a data network (data network, DN).

For example, by using a 3rd generation partnership project (3rd generation partnership project, 3GPP) technology and a non-3GPP technology, the terminal device may access the network separately via a first mobility management function network element and a second mobility management function network element. When determining, according to an operator authentication policy, that the primary authentication needs to be performed on the terminal device, a home network element may request a mobility management function network element to perform primary authentication on the terminal device. If the two mobility function network elements cannot start the primary authentication on the terminal device, the mobility management function network elements may locally set pending flags, where the pending flag may be for triggering the primary authentication when the primary authentication can be started on the terminal device. However, two primary authentication procedures may cause unnecessary signaling overheads.

### SUMMARY

This application provides a communication method and a communication apparatus, to avoid performing a redundant primary authentication procedure on a terminal device and reduce signaling overheads.

According to a first aspect, a communication method is provided. The method may be performed by a home network element, or may be performed by a chip or a circuit of the home network element. This is not limited in this application. For ease of description, the following provides descriptions by using an example in which the method is performed by the home network element.

The method includes: When a terminal device registers with a network separately via a first mobility management function network element and a second mobility management function network element, the home network element stores an identifier of the first mobility management function network element and an identifier of the second mobility management function network element. The home network element sends a first authentication notification message to the first mobility management function network element when determining that primary authentication needs to be performed on the terminal device, where the first authentication notification message is for requesting to trigger the primary authentication on the terminal device. The home network element receives a first authentication response message from the first mobility management function network element, where the first authentication response message indicates that the primary authentication on the terminal device is incapable of being started. The home network element sends a second authentication notification message to the second mobility management function network element in response to the first authentication response message, where the second authentication notification message is for requesting to trigger the primary authentication on the terminal device. The home network element receives a second authentication response message from the second mobility management function network element. The home network element sends a first notification message to the first mobility management function network element when determining, based on the second authentication response message, that the second mobility management function network element is capable of starting the primary authentication on the terminal device, where the first notification message indicates the first mobility management function network element to cancel a first pending flag, and the first pending flag indicates that the primary authentication on the terminal device needs to be triggered.

The canceling the first pending flag may be understood as that the first pending flag becomes invalid. If the first pending flag is indicated by a bit, for example, 1 indicates that the first pending flag is valid, and 0 indicates that the first pending flag is invalid, the first mobility management function network element changes the first pending flag from 1 to 0. Alternatively, if the first pending flag is valid when being present, and is invalid when being absent, the first mobility management function network element deletes the first pending flag. Another case is not enumerated.

It should be understood that the first pending flag indicates that when the terminal device re-registers with the network via the first mobility management function network element or the terminal device is reachable, the first mobility management function network element determines, based on the locally set first pending flag, to perform authentication on the terminal device.

For example, when the terminal device is re-attached to a same mobility management function network element or the terminal device becomes reachable, the mobility management function network element checks an authentication pending flag, and performs re-authentication when necessary. After the re-authentication on the terminal device is complete, the mobility management function network element resets the authentication pending flag. If the terminal device is attached to a new mobility management function network element (for example, in a mobility scenario), the new mobility management function network element may retrieve a context of the terminal device from a previous mobility management function network element, determine that authentication on the terminal device is pending, and perform re-authentication.

It should be understood that, when the home network element stores the identifiers of both the first mobility management function network element and the second mobility management function network element, how the home network element preferentially selects the first mobility management function network element to initiate an authentication request is not limited in this embodiment of this application.

In this embodiment of this application, that the primary authentication on the terminal device is incapable of being started may be understood as: The terminal device is unreachable, or the first mobility management function network element does not find the terminal device. "Incapable of being started" may alternatively be replaced with "cannot be started", "cannot be triggered", "incapable of being triggered", or the like. For example, after receiving the first authentication notification message, the first mobility management function network element determines, based on a local authentication policy and a status of the terminal device, whether to trigger the primary authentication on the terminal device. For example, if the first mobility management function network element finds that the terminal device is unreachable, or the first mobility management function network element does not find the terminal device, the first mobility management function network element sends the first authentication response message to the home network element.

According to the solution provided in this application, the home network element determines, based on the received second authentication response message, that the second mobility management function network element is capable of starting the primary authentication on the terminal device, and may send the first notification message to the first mobility management function network element that serves the terminal device, where the first notification message is for notifying the first mobility management function network element to delete or reset the pending flag, or is for notifying the first mobility management function network element to cancel or terminate the primary authentication procedure performed by a home network, to prevent the first mobility management function network element from subsequently triggering a re-authentication procedure on the terminal device, and reduce signaling overheads.

With reference to the first aspect, in some implementations of the first aspect, the first authentication response message includes a first cause value, and the first cause value indicates that the first mobility management function network element is incapable of performing primary authentication on the terminal device.

According to the foregoing solution, the first authentication response message carries the first cause value, and the first cause value indicates that the first mobility management function network element is incapable of starting the primary authentication on the terminal device. For example, the first cause value may indicate that the primary authentication on the terminal device fails to be started, or the first cause value may indicate that the terminal device is unreachable. In this case, the home network element may determine, based on the first cause value, that the first mobility management function network element does not perform primary authentication on the terminal device.

With reference to the first aspect, in some implementations of the first aspect, a first authentication pending flag is set in response to the first authentication response message, where the first authentication pending flag indicates that the first pending flag is set on the first mobility management function network element. That the home network element sends the first notification message to the first mobility management function network element includes: The home network element sends the first notification message to the first mobility management function network element based on the first authentication pending flag.

Optionally, the first authentication pending flag is set based on the first cause value.

The first notification message has an indication function, or carries a cause value having an indication function, that is, indicates the first mobility management function network element to delete the first pending flag, where the first pending flag indicates that the primary authentication on the terminal device needs to be triggered. Alternatively, the first notification message indicates the first mobility management function network element to cancel or terminate the primary authentication procedure performed by the home network.

For example, the first notification message may be an authentication notification message that carries a cause value, a first notification message that carries a cause value, or a first notification message that does not carry a cause value. The cause value may indicate that the second mobility management function network element has performed primary authentication on the terminal device, indicate that the primary authentication on the terminal device is being performed, indicate that the primary authentication on the terminal device succeeds, indicate the first mobility management function network element to delete the first pending flag, or indicate the first mobility management function network element not to subsequently trigger the primary authentication procedure on the terminal device based on the locally set first pending flag, that is, indicate the first mobility management function network element to cancel or terminate the primary authentication procedure performed by the home network.

Optionally, the home network element sets the first authentication pending flag only when receiving a specific failure cause value. For example, the home network element sets the first authentication pending flag when the failure cause value received by the home network element indicates that the terminal device is unreachable.

According to the foregoing solution, the home network element may learn, based on the first cause value, that the terminal device is unreachable or the first mobility management function network element fails to start the primary authentication on the terminal device. Therefore, the home network element may set the first authentication pending flag, and may associate the first authentication pending flag with the first mobility management function network element.

For example, after receiving the second authentication response message that does not carry a cause value, the home network element may determine that the second mobility management function network element is capable of performing the primary authentication procedure on the terminal device. Further, the home network element determines whether to send the first notification message to the first mobility management function network element. For example, the home network element determines whether the first mobility management function network element exists; and if the first mobility management function network element exists, the home network element further determines whether to send the first notification message to the first mobility management function network element.

For example, when it is determined that the first notification message needs to be sent, the first notification message may be sent, where the first notification message is for notifying to cancel or terminate the home network-triggered primary authentication procedure, or is for notifying that the pending flag that is set on the first mobility management function network element can be canceled.

With reference to the first aspect, in some implementations of the first aspect, the home network element deletes the first authentication pending flag after sending the first notification message to the first mobility management function network element.

For example, the first authentication pending flag may be deleted after the primary authentication on the terminal device succeeds or in a process of performing primary authentication on the terminal device.

According to the foregoing solution, the first authentication pending flag is deleted, so that the home network element may reject, if the first mobility management function network element subsequently requests to perform primary authentication on the terminal device, an authentication request of the first mobility management function network element based on that the first authentication pending flag is not locally stored, to avoid a redundant authentication procedure and reduce the signaling overheads.

With reference to the first aspect, in some implementations of the first aspect, the sending the second authentication notification message to the second mobility management function network element in response to the first authentication response message includes: sending the second authentication notification message to the second mobility management function network element based on the identifier of the second mobility management function network element in response to the first authentication response message.

With reference to the first aspect, in some implementations of the first aspect, when either of the following is met, it is determined that the second mobility management function network element is capable of starting the primary authentication on the terminal: The second authentication response message carries an acknowledgment message for the second authentication notification message; or the second authentication response message does not carry a second cause value, where the second cause value indicates that the second mobility management function network element is incapable of performing primary authentication on the terminal device.

It should be understood that an occasion for sending the first notification message is not limited in this application.

With reference to the first aspect, in some implementations of the first aspect, when it is determined, based on the second authentication response message, that the second mobility management function network element is incapable of starting the primary authentication on the terminal device, the second authentication response message includes a third cause value, and the third cause value indicates that the second mobility management function network element is incapable of performing primary authentication on the terminal device. For example, the third cause value includes that the second mobility management function network element does not find the terminal device or the terminal device is unreachable.

For example, when it is determined, based on the second authentication response message, that the primary authentication on the terminal device is incapable of being started, and one of the first mobility management function network element and the second mobility management function network element subsequently starts the primary authentication on the terminal device, either of the following operations is performed for the other of the first mobility management function network element and the second mobility management function network element: notifying a fourth mobility management function network element to cancel a pending flag; or rejecting a primary authentication request initiated by a fourth mobility management function network element.

In other words, if two mobility management function network elements cannot access the terminal device, the two mobility management function network elements store two pending flags. When the terminal device becomes reachable, and one of the mobility management function network elements starts the primary authentication procedure, the home network element may reject a primary authentication request of the other mobility management function network element, or notify the other mobility management function network element to delete a pending flag, to perform an appropriate operation for the other mobility management function network element. Alternatively, the home network element may respond to two primary authentication procedures in sequence.

According to the foregoing solution, the home network element may determine, based on the cause value, that the second mobility management function network element does not perform primary authentication on the terminal device. The cause value indicates that the second mobility management function network element is incapable of starting the primary authentication on the terminal device. For example, the failure cause value may indicate that the primary authentication on the terminal device fails to be started, or the failure cause value may indicate that the terminal device is unreachable.

With reference to the first aspect, in some implementations of the first aspect, when the terminal device registers with the network again via the second mobility management function network element, the home network element receives a first request message from a second authentication server function network element, where the first request message is for requesting to perform first primary authentication on the terminal device, the first request message includes a second serving network name, and the second serving network name indicates a serving network in which the second mobility management function network element is located. The home network element determines, based on the second serving network name, that the first primary authentication is requested by the second mobility management function network element. The home network element sends a second notification message to a first authentication server function network element or the first mobility management function network element, where the second notification message indicates the first mobility management function network element to cancel the first pending flag.

The second notification message has an indication function, or carries a cause value having an indication function, that is, indicates the first mobility management function network element to delete or invalidate the first pending flag, where the first pending flag indicates that the primary authentication on the terminal device needs to be triggered. Alternatively, the second notification message indicates the first mobility management function network element to cancel or terminate the primary authentication procedure performed by the home network.

For example, the second notification message may be an authentication notification message that carries a cause value, a second notification message that carries a cause value, or a second notification message that does not carry a cause value. The cause value may indicate that the second mobility management function network element has performed primary authentication on the terminal device, indicate that the primary authentication on the terminal device is being performed, indicate that the primary authentication on the terminal device succeeds, indicate the first mobility management function network element to delete the first pending flag, or indicate the first mobility management function network element not to subsequently trigger the primary authentication procedure on the terminal device based on the locally set first pending flag, that is, indicate the first mobility management function network element to cancel or terminate the primary authentication procedure performed by the home network. Correspondingly, the first mobility management function network element may determine, based on the second notification message or the cause value carried in the second notification message, not to trigger the primary authentication on the terminal device, to avoid the redundant primary authentication procedure and reduce the signaling overheads.

According to the foregoing solution, the home network element determines a specific mobility management function network element that requests the authentication, so that after learning that the current primary authentication is requested by a mobility management function network element that serves the terminal device, and after receiving an authentication request initiated by the first mobility management function network element that serves the terminal device, the home network element rejects the authentication request of the first mobility management function network element, to avoid the redundant authentication procedure and reduce the signaling overheads.

With reference to the first aspect, in some implementations of the first aspect, that the home network element sends the second notification message to the first authentication server function network element or the first mobility management function network element includes: The home network element sends the second notification message to the first mobility management function network element based on the stored identifier of the first mobility management function network element; or the home network element sends the first notification message to the first mobility management function network element based on the set first authentication pending flag, where the first authentication pending flag indicates that the first pending flag is set on the first mobility management function network element.

According to the foregoing solution, the home network element determines the specific mobility management function network element that requests the authentication, so that after learning that the current primary authentication is requested by the mobility management function network element that serves the terminal device, the home network element directly sends, to the first mobility management function network element that serves the terminal device and that does not trigger an authentication request, the notification message for canceling the pending flag, to avoid triggering the redundant authentication procedure and reduce the signaling overheads. Compared with receiving an authentication request sent by the first mobility management function network element and then rejecting the authentication request, this solution can reduce unnecessary overheads.

With reference to the first aspect, in some implementations of the first aspect, before that the home network element sends the second notification message to the first authentication server function network element or the first mobility management function network element, the method further includes: The home network element determines to perform first primary authentication on the terminal device. The home network element sends an authentication vector to the second authentication server function network element, where the authentication vector is for performing first primary authentication on the terminal device. The home network element receives an authentication result from the second authentication server function network element. That the home network element sends the second notification message to the first authentication server function network element or the first mobility management function network element includes: The home network element sends the second notification message to the first authentication server function network element or the first mobility management function network element when the authentication result indicates that the first primary authentication succeeds.

According to the foregoing solution, when determining that the primary authentication performed by the second mobility management function network element on the terminal device succeeds, the home network element sends the second notification message to the first authentication server function network element or the first mobility management function network element, to prevent the first mobility management function network element from subsequently re-triggering primary authentication on the terminal device when the terminal device is reachable. This avoids the redundant authentication procedure and reduces the signaling overheads.

With reference to the first aspect, in some implementations of the first aspect, the home network element deletes the second authentication pending flag when the authentication result indicates that the first primary authentication succeeds, where the second authentication pending flag indicates that the second pending flag is set on the second mobility management function network element, and the second pending flag indicates that the primary authentication on the terminal device needs to be triggered.

According to the foregoing solution, the home network element may reject, if the first mobility management function network element subsequently requests to perform primary authentication on the terminal device, an authentication request of the first mobility management function network element based on that the second authentication pending flag is not locally stored, to avoid the redundant authentication procedure and reduce the signaling overheads.

With reference to the first aspect, in some implementations of the first aspect, before that the home network element receives the first request message from the second authentication server function network element, the method further includes: The home network element sets the second authentication pending flag based on the third cause value, where the second authentication pending flag indicates that the second pending flag is set on the second mobility management function network element. That the home network element determines to perform first primary authentication on the terminal device includes: The home network element determines, based on the stored first authentication pending flag and the stored second authentication pending flag, to perform first primary authentication on the terminal device, where the first authentication pending flag indicates that the first pending flag is set on the first mobility management function network element.

According to the foregoing solution, the first authentication pending flag and the second authentication pending flag are set on the home network element when the home network element determines that neither the first mobility management function network element nor the second mobility management function network element that serves the terminal device is capable of performing primary authentication on the terminal device, where the first authentication pending flag and the second authentication pending flag are used by the home network element to determine that the primary authentication on the terminal device has not been performed or has not occurred currently. In this case, the home network element may determine, after a 1^{st} authentication request message is received, to perform primary authentication on the terminal device.

With reference to the first aspect, in some implementations of the first aspect, that the home network element determines, based on the second serving network name, that the first primary authentication is requested by the second mobility management function network element includes: The home network element determines, based on the second serving network name and a stored correspondence between the second serving network name and the second mobility management function network element, that the first primary authentication is requested by the second mobility management function network element. Alternatively, the home network element determines, based on information that is included in the second serving network name and that indicates the serving network of the second mobility management function network element and a stored correspondence between the second mobility management function network element and the information that indicates the serving network of the second mobility management function network element, that the first primary authentication is requested by the second mobility management function network element. Alternatively, the home network element determines, based on that information that is included in the second serving network name and that indicates the serving network of the second mobility management function network element matches information that is included in the stored identifier of the second mobility management function network element and that indicates the serving network of the second mobility management function network element, that the first primary authentication is requested by the second mobility management function network element.

With reference to the first aspect, in some implementations of the first aspect, information indicating a serving network of the first mobility management function network element includes an identifier of a public land mobile network corresponding to the first mobility management function network element.

With reference to the first aspect, in some implementations of the first aspect, the first request message further includes a fourth cause value, and the fourth cause value indicates that the first primary authentication is determined based on the second pending flag.

According to the foregoing solution, when the terminal device registers with the network again via the second mobility management function network element, the second mobility management function network element may trigger the primary authentication on the terminal device based on the locally set second pending flag.

With reference to the first aspect, in some implementations of the first aspect, before that the home network element sends the second notification message to the first authentication server function network element, the method further includes: The home network element receives a second request message from the first authentication server function network element when the terminal device registers with the network again via the first mobility management function network element, where the second request message is for requesting to perform second authentication on the terminal device, the second request message includes a first serving network name, and the first serving network name indicates the serving network in which the first mobility management function network element is located.

According to the foregoing solution, when the home network element learns that the current primary authentication is requested by the second mobility management function network element that serves the terminal device, after receiving the authentication request initiated by the first mobility management function network element that serves the terminal device, the home network element may reject the authentication request of the first mobility management function network element based on that the current primary authentication on the terminal device has been performed, to avoid the redundant primary authentication procedure and reduce the signaling overheads.

With reference to the first aspect, in some implementations of the first aspect, the second request message further includes a fifth cause value, and the fifth cause value indicates that the second primary authentication is determined based on the first pending flag.

With reference to the first aspect, in some implementations of the first aspect, the second notification message includes a sixth cause value, and the sixth cause value indicates not to perform primary authentication on the terminal device when the terminal device registers with the network again via the first mobility management function network element, in other words, indicates the first mobility management function network element to cancel the first pending flag.

With reference to the first aspect, in some implementations of the first aspect, when it is determined, based on the second authentication response message, that the primary authentication on the terminal device is incapable of being started, and a third mobility management function network element subsequently starts the primary authentication on the terminal device, either of the following operations is performed for a fourth mobility management function network element: notifying the fourth mobility management function network element to cancel a pending flag; or rejecting a primary authentication request initiated by the fourth mobility management function network element, where the third mobility management function network element is one of the first mobility management function network element and the second mobility management function network element, and the fourth mobility management function network element is the other of the first mobility management function network element and the second mobility management function network element other than the third mobility management function network element.

With reference to the first aspect, in some implementations of the first aspect, a first request message triggered by the third mobility management function network element is received, where the first request message is for requesting to perform primary authentication on the terminal device, the first request message includes a second serving network name, and the second serving network name indicates a serving network in which the third mobility management function network element is located. It is determined, based on the second serving network name, that the operation needs to be performed for the fourth mobility management function network element.

With reference to the first aspect, in some implementations of the first aspect, the determining, based on the second serving network name, that the operation needs to be performed for the fourth mobility management function network element includes: determining, based on the second serving network name, the stored identifier of the first mobility management function network element, and the stored identifier of the second mobility management function network element, that the operation needs to be performed for the fourth mobility management function network element; or determining, based on the second serving network name, the set first authentication pending flag, and a set second authentication pending flag, that the operation needs to be performed for the fourth mobility management function network element, where the first authentication pending flag indicates that the first pending flag is set on the first mobility management function network element, the second authentication pending flag indicates that a second pending flag is set on the second mobility management function network element, and the second pending flag indicates that the primary authentication on the terminal device needs to be triggered.

With reference to the first aspect, in some implementations of the first aspect, before the determining that the operation needs to be performed for the fourth mobility management function network element, the method further includes: determining to perform primary authentication on the terminal device; sending an authentication vector to the third mobility management function network element, where the authentication vector is for performing primary authentication on the terminal device; and receiving an authentication result for the terminal device. The determining that the operation needs to be performed for the fourth mobility management function network element includes: when the authentication result indicates that the authentication on the terminal device succeeds, determining that the operation needs to be performed for the fourth mobility management function network element.

With reference to the first aspect, in some implementations of the first aspect, before the receiving the first request message triggered by the third mobility management function network element, the method further includes: setting the first authentication pending flag and the second authentication pending flag when determining that the first mobility management function network element and the second mobility management function network element are incapable of starting the primary authentication on the terminal device. The determining to perform primary authentication on the terminal device includes: determining, based on the stored first authentication pending flag and the stored second authentication pending flag, to perform primary authentication on the terminal device.

With reference to the first aspect, in some implementations of the first aspect, before the determining, based on the second serving network name, that the operation needs to be performed for the fourth mobility management function network element, the method further includes: determining, based on the second serving network name and a stored correspondence between the second serving network name and the third mobility management function network element, that the first request message is triggered by the third mobility management function network element; or determining, based on an identifier that is of a public land mobile network and that is included in the second serving network name and a stored correspondence between the identifier of the public land mobile network and the third mobility management function network element, that the first request message is triggered by the third mobility management function network element.

With reference to the first aspect, in some implementations of the first aspect, before the determining, based on the second serving network name, that the operation needs to be performed for the fourth mobility management function network element, the method further includes: receiving a second request message triggered by the fourth mobility management function network element, where the second request message is for requesting to perform primary authentication on the terminal device, the second request message includes a third serving network name, and the third serving network name indicates a serving network in which the fourth mobility management function network element is located.

In conclusion, the first mobility management function network element and the second mobility management function network element locally set the first pending flag and the second pending flag when neither the first mobility management function network element nor the second mobility management function network element is capable of starting the primary authentication on the terminal device. Optionally, the home network element sets the first authentication pending flag and the second authentication pending flag. Further, when the terminal device is reachable or registers with the network via the third mobility management function network element, the third mobility management function network element triggers the primary authentication procedure on the terminal device based on the local pending flag. Correspondingly, after receiving the authentication request sent by the third mobility management function network element, the home network element notifies the fourth mobility management function network element to cancel the pending flag, or rejects the primary authentication request subsequently initiated by the fourth mobility management function network element. If the third mobility management function network element is the first mobility management function network element, the fourth mobility management function network element is the second mobility management function network element. On the contrary, if the third mobility management function network element is the second mobility management function network element, the fourth mobility management function network element is the first mobility management function network element. For ease of description, in this embodiment of this application, an example in which the second mobility management function network element requests to trigger the primary authentication procedure on the terminal device and the home network element notifies the first mobility management function to cancel the pending flag or rejects the primary authentication request subsequently initiated by the first mobility management function network element is used for description. For a specific implementation, refer to related descriptions in the following specific embodiments. If the first mobility management function network element requests to trigger the primary authentication procedure on the terminal device, the home network element notifies the second mobility management function to cancel the pending flag or rejects a primary authentication request initiated by the second mobility management function network element. A specific implementation is similar.

In other words, when primary authentication needs to be performed on the terminal device, but neither of two mobility management function network elements can reach the terminal device, the two mobility management function network elements store two pending flags. When the terminal device becomes reachable, and one of the mobility management function network elements starts the primary authentication procedure, the home network element may reject a primary authentication request of the other mobility management function network, or notify the other mobility management function network element to delete a pending flag, to perform an appropriate operation for the other mobility management function network element. Alternatively, the home network element may respond to two primary authentication procedures in sequence.

According to a second aspect, a communication method is provided. The method may be performed by a first mobility management function network element, or may be performed by a chip or a circuit of the first mobility management function network element. This is not limited in this application. For ease of description, the following provides descriptions by using an example in which the method is performed by the first mobility management function network element.

The method includes: The first mobility management function network element receives a first authentication notification message from a home network element when a terminal device registers with a network separately via the first mobility management function network element and a second mobility management function network element, where the first authentication notification message is for requesting to trigger primary authentication on the terminal device. The first mobility management function network element sets a first pending flag when determining that the primary authentication is incapable of being performed on the terminal device, and sends a first authentication response message to the home network element, where the first pending flag indicates that the primary authentication on the terminal device needs to be triggered when the terminal device accesses the first mobility management function network element again. The first mobility management function network element receives a notification message from the home network element when the second mobility management function network element is capable of performing primary authentication on the terminal device, where the notification message indicates not to perform primary authentication on the terminal device when the terminal device registers with the network again via the first mobility management function network element. The first mobility management function network element deletes the first pending flag based on the notification message, or cancels or terminates, based on the notification message, the primary authentication procedure performed by a home network.

According to the solution provided in this application, the first mobility management function network element may determine, by receiving the notification message, to delete or reset the pending flag, or cancel or terminate the primary authentication procedure performed by the home network, to avoid subsequently triggering a re-authentication procedure on the terminal device, and reduce signaling overheads.

With reference to the second aspect, in some implementations of the second aspect, the first authentication response message includes a first cause value, and the first cause value indicates that the first mobility management function network element is incapable of performing primary authentication on the terminal device.

With reference to the second aspect, in some implementations of the second aspect, a first request message further includes a second cause value, and the second cause value indicates that the primary authentication is determined based on the first pending flag.

With reference to the second aspect, in some implementations of the second aspect, that the first mobility management function network element receives the notification message from the home network element includes: The first mobility management function network element receives the notification message from the home network element when the primary authentication on the terminal device succeeds.

For beneficial effects of the second aspect and some implementations of the second aspect, correspondingly refer to the related descriptions in the first aspect. Details are not described herein again.

According to a third aspect, a communication apparatus, for example, a home network element, is provided. The home network element includes: a processing unit, used for the home network element to: when a terminal device registers with a network separately via a first mobility management function network element and a second mobility management function network element, store an identifier of the first mobility management function network element and an identifier of the second mobility management function network element; and a transceiver unit, used for the home network element to send a first authentication notification message to the first mobility management function network element when it is determined that primary authentication needs to be performed on the terminal device, where the first authentication notification message is for requesting to trigger the primary authentication on the terminal device. The transceiver unit is further used for the home network element to receive a first authentication response message from the first mobility management function network element, where the first authentication response message indicates that the primary authentication is incapable of being performed on the terminal device. The transceiver unit is further used for the home network element to send a second authentication notification message to the second mobility management function network element in response to the first authentication response message, where the second authentication notification message is for requesting to trigger the primary authentication on the terminal device. The transceiver unit is further used for the home network element to receive a second authentication response message from the second mobility management function network element. The transceiver unit is further used for the home network element to send a first notification message to the first mobility management function network element when it is determined, based on the second authentication response message, that the second mobility management function network element is capable of starting the primary authentication on the terminal device, where the first notification message indicates not to perform primary authentication on the terminal device when the terminal device registers with the network again via the first mobility management function network element. For example, the first notification message indicates the first mobility management function network element to delete a first pending flag, where the first pending flag indicates that the primary authentication on the terminal device needs to be triggered. Alternatively, the first notification message is for notifying the first mobility management function network element to cancel or terminate the primary authentication procedure performed by a home network.

The transceiver unit may perform receiving and sending in the first aspect, and the processing unit may perform processing other than the receiving and sending in the first aspect.

According to a fourth aspect, a communication apparatus, for example, a first mobility management function network element, is provided. The first mobility management function network element includes: a transceiver unit, used for the first mobility management function network element to receive a first authentication notification message from a home network element when a terminal device registers with a network separately via the first mobility management function network element and a second mobility management function network element, where the first authentication notification message is for requesting to trigger primary authentication on the terminal device; and a processing unit, used for the first mobility management function network element to set a first pending flag when it is determined that the primary authentication is incapable of being performed on the terminal device, and send a first authentication response message to the home network element, where the first pending flag indicates that the primary authentication on the terminal device needs to be triggered when the terminal device accesses the first mobility management function network element again. The transceiver unit is further used for the first mobility management function network element to receive a notification message from the home network element when the second mobility management function network element is capable of performing primary authentication on the terminal device, where the notification message indicates the first mobility management function network element to delete the first pending flag. The processing unit is further used for the first mobility management function network element to delete the first pending flag based on the notification message, or cancel or terminate, based on the notification message, the primary authentication procedure performed by a home network.

The transceiver unit may perform receiving and sending in the second aspect, and the processing unit may perform processing other than the receiving and sending in the second aspect.

According to a fifth aspect, a communication apparatus is provided, including a processor. The processor is coupled to a memory, the memory is configured to store a computer program, and the processor is configured to invoke the computer program from the memory and run the computer program, to enable the apparatus to perform the method according to any one of the first aspect, the second aspect, and the possible implementations of the first aspect and the second aspect.

Optionally, there are one or more processors, and there are one or more memories.

Optionally, the memory may be integrated with the processor, or the memory and the processor may be separately disposed.

Optionally, the communication apparatus further includes a transceiver.

According to a sixth aspect, a communication system is provided, including a home network element and a first mobility management function network element, where the home network element is configured to perform the method according to any one of the first aspect and the possible implementations of the first aspect, and the first mobility management function network element is configured to perform the method according to any one of the second aspect and the possible implementations of the second aspect.

Optionally, the communication system further includes a first authentication server function network element, a second authentication server function network element, or a terminal device.

According to a seventh aspect, a computer-readable storage medium is provided. The computer-readable storage medium stores a computer program or code. When the computer program or code is run on a computer, the computer is enabled to perform the method according to any one of the first aspect, the second aspect, and the possible implementations of the first aspect and the second aspect.

According to an eighth aspect, a chip is provided, including at least one processor. The at least one processor is coupled to a memory, the memory is configured to store a computer program, and the processor is configured to invoke the computer program from the memory and run the computer program, to enable an apparatus in which the chip is installed to perform the method according to any one of the first aspect, the second aspect, and the possible implementations of the first aspect and the second aspect.

The chip may include an output circuit or interface configured to send information or data and an input circuit or interface configured to receive information or data.

According to a ninth aspect, a computer program product is provided. The computer program product includes computer program code. When the computer program code is run on a computer, the computer is enabled to perform the method according to any one of the first aspect, the second aspect, and the possible implementations of the first aspect and the second aspect.

### BRIEF DESCRIPTION OF DRAWINGS

FIG. 1 is a diagram of a network architecture 100;
FIG. 2 is a diagram of registration of UE with a network;
FIG. 3 is a diagram of initiating a home network-triggered primary authentication procedure by a UDM;
FIG. 4 is a schematic flowchart of a communication method 400 according to an embodiment of this application;
FIG. 5A to FIG. 5C are a schematic flowchart of a communication method 500 according to an embodiment of this application;
FIG. 6A and FIG. 6B are a schematic flowchart of a communication method 600 according to an embodiment of this application;
FIG. 7A and FIG. 7B are a schematic flowchart of a communication method 700 according to an embodiment of this application;
FIG. 8 is a diagram of a structure of a communication apparatus 1000 according to an embodiment of this application;
FIG. 9 is a diagram of a structure of a communication apparatus 2000 according to an embodiment of this application; and
FIG. 10 is a diagram of a structure of a chip system 3000 according to an embodiment of this application.

### DESCRIPTION OF EMBODIMENTS

The following describes technical solutions in this application with reference to the accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system or another communication system.

In a communication system, a part operated by an operator may be referred to as a public land mobile network (public land mobile network, PLMN), and may also be referred to as an operator network or the like. The PLMN is a network established and operated by a government or an operator approved by the government, to provide a land mobile communication service for the public, and is mainly a public network used by a mobile network operator (mobile network operator, MNO) to provide a mobile broadband access service for a user. The PLMN described in embodiments of this application may be specifically a network compliant with a requirement in a 3rd generation partnership project (3rd generation partnership project, 3GPP) standard, referred to as a 3GPP network for short. The 3GPP network generally includes but is not limited to a 5th generation (5th generation, 5G) mobile communication network, a 4th generation (4th generation, 4G) mobile communication network, and another future communication system, for example, a 6th generation (6th generation, 6G) mobile communication network.

For ease of description, the PLMN or the 5G network is used as an example for description in embodiments of this application.

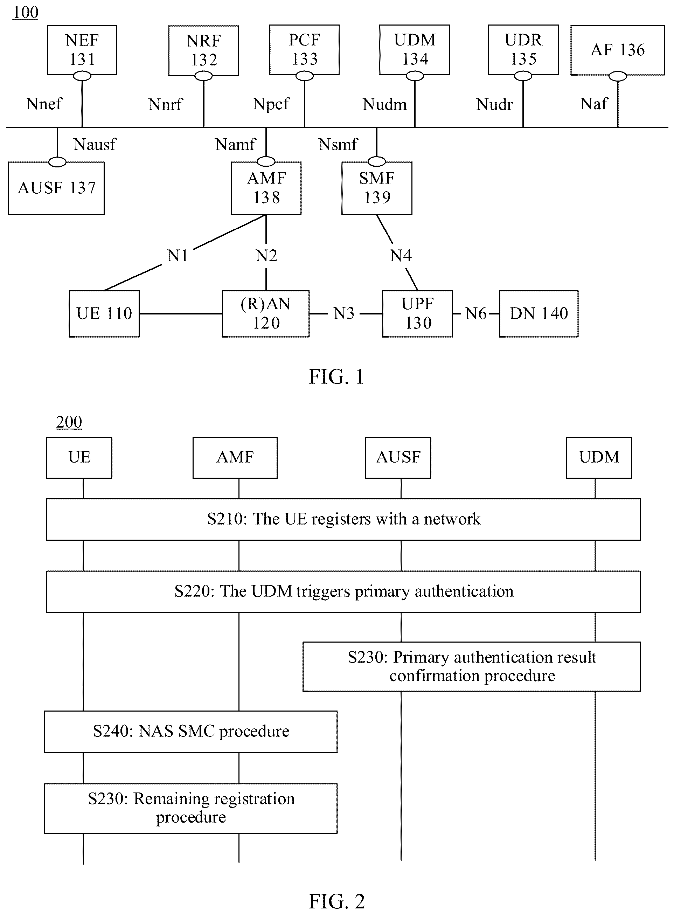

FIG. 1 is a diagram of a network architecture 100. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes functions of network elements in the parts.

The terminal device part may include a terminal device 110. The terminal device 110 is a device that provides voice and/or data connectivity for a user. The terminal device 110 may also be referred to as user equipment UE. The terminal device 110 in this application is a device having a wireless transceiver function, and may communicate with one or more core network (core network, CN) devices through an access network device (which may also be referred to as an access device) in the (radio) access network (R)AN 120. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, and include an indoor terminal device, an outdoor terminal device, a handheld terminal device, or a vehicle-mounted terminal device; may be deployed on a water surface (for example, on a ship); or may be deployed in air (for example, on an aircraft, a balloon, or a satellite). The terminal device 110 may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), or the like. Alternatively, the terminal device 110 may be a handheld device having a wireless communication function, a compute device or another device connected to a wireless modem, a vehicle-mounted device, a wearable device, an uncrewed aerial vehicle device, a terminal in an internet of things or internet of vehicles, a terminal in any form in the 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in transportation security, a wireless terminal in a smart city, a wireless terminal in a smart home, or the like. The terminal device herein is a 3GPP terminal. A type or the like of the terminal device is not limited in embodiments of this application. For ease of description, in this application, an example in which the UE represents the terminal device is used for description below.

The (R)AN 120 may include one or more access network elements or access network devices. An interface between the access network device and the terminal device may be a Uu interface (or referred to as an air interface, that is, a message exchanged between the access network device and the terminal device may be referred to as an air interface message). Certainly, in future communication, names of interfaces may remain unchanged, or may be replaced with other names. This is not limited in this application. The (R)AN 120 is a device that provides a wireless communication function for the terminal device 110, is a node or device that may enable the terminal device to access a wireless network, and may also be referred to as a network device. The (R)AN 120 may be considered as a sub-network of the operator network, and is an implementation system between a service node in the operator network and the terminal device 110. For example, the terminal device 110 may be connected to the service node in the operator network through the (R)AN 120, to obtain a service provided by the service node. For ease of description, in all embodiments of this application, the foregoing apparatuses that provide the wireless communication function for the terminal device 110 are collectively referred to as access network devices, referred to as RANs for short. It should be understood that a specific type of the access network device is not limited in this specification.

The CN part may include but is not limited to the following network functions (network functions, NFs): a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, an application function (application function, AF) 136, an authentication server function (authentication server function, AUSF) 137, an access and mobility management function (access and mobility management function, AMF) 138, and a session management function (session management function, SMF) 139.

The data network DN 140 may also be referred to as a packet data network (packet data network, PDN), and is usually a network, for example, a third-party network, located outside the operator network.

The following further briefly describes functions of the NFs included in the CN.
1. The UPF 130 is a gateway provided by an operator, and is a gateway for communication between the operator network and the DN 140. The UPF network function 130 include user plane-related functions such as packet routing and transmission, packet inspection, traffic usage reporting, quality of service (quality of service, QoS) handling, lawful interception, uplink packet verification, and downlink packet buffering.
2. The NEF 131 is a control plane function provided by the operator, mainly enables a third party to use a service provided by the network, and supports exposure of capabilities, events, and data analytics by the network, secure provision of information from an external application to the PLMN, translation of internal-external information of the PLMN, and the like.
3. The NRF 132 is a control plane function provided by the operator, and may be configured to maintain real-time information of network functions and services in the network.
4. The PCF 133 is a control plane function provided by the operator, mainly supports provision of a unified policy framework to govern network behavior and provision of policy rules for control plane network functions, and is responsible for accessing user subscription information relevant for policy decisions.
5. The UDM 134 is a control plane function provided by the operator, and is responsible for storage of a subscription permanent identifier (subscription permanent identifier, SUPI) of a subscriber in the operator network, a generic public subscription identifier (generic public subscription identifier, GPSI) of the subscriber, a credential (credential), and other information.
6. The UDR 135 is a control plane function provided by the operator, provides functions of storage and retrieval of subscription data for the UDM, provides functions of storage and retrieval of policy data for the PCF, stores and retrieves NF group ID (group ID) information of a user, and so on.
7. The AF 136 is a control plane function provided by the operator, and mainly interacts with other NFs in the PLMN to provide corresponding services such as provision of visited network selection information for roaming UE, traffic routing guidance, and access to the NEF 131.
8. The AUSF 137 is a control plane function provided by the operator, and is usually for primary authentication, namely, authentication between the terminal device 110 (the subscriber) and the operator network.
9. The AMF 138 is a control plane network function provided by the operator network, and is responsible for access control and mobility management for access of the terminal device 110 to the operator network, for example, including mobility state management, allocation of a temporary identifier of a user, and user authentication and authorization.
10. The SMF 139 is a control plane network function provided by the operator network, is responsible for managing a protocol data unit (protocol data unit, PDU) session (including session establishment, modification, and release) of the terminal device 110, and is for selection and reselection of a user plane function network element, internet protocol (internet protocol, IP) address allocation of the terminal device, quality of service (quality of service, QoS) control, and the like. The PDU session is a channel for transmitting a PDU, and the terminal device and the DN 140 transmit the PDU to each other through the PDU session. The SMF network function 139 is responsible for establishment, maintenance, deletion, and the like of the PDU session. The SMF network function 139 includes session-related functions such as session management (for example, session establishment, modification, and release, including maintenance of a tunnel between the user plane function UPF 130 and the (R)AN 120), selection and control of the UPF network function 130, service and session continuity (service and session continuity, SSC) mode selection, and roaming.

It may be understood that the foregoing network element or function may be a physical entity in a hardware device, a software instance running on dedicated hardware, or a virtualization function instantiated on a shared platform (for example, a cloud platform). In short, an NF may be implemented by hardware or software.

In FIG. 1, Nnef, Nnrf, Npcf, Nudm, Nudr, Naf, Nausf, Namf, Nsmf, N1, N2, N3, N4, and N6 are sequence numbers of interfaces. For example, for meanings of the sequence numbers of the interfaces, refer to meanings defined in a 3GPP standard protocol. The meanings of the sequence numbers of the interfaces are not limited in this application. It should be noted that the names of the interfaces between the network functions in FIG. 1 are merely examples. In a specific implementation, the interfaces in the system architecture may alternatively have other names. This is not limited in this application. In addition, names of messages (or signaling) communicated between the network elements are also merely examples, and do not constitute any limitation on functions of the messages.

It should be noted that in the architecture shown in FIG. 1, an interface between the (R)AN and the CN may also be referred to as an NG interface (not shown in the figure), and the (R)AN and the CN are connected through the NG interface. The NG interface may include an NG-C interface and an NG-U interface. The NG-C interface is a control plane interface connecting the (R)AN and the AMF, and is configured to transmit control plane data. The NG-U interface is a user plane interface connecting the (R)AN and the UPF, and is configured to transmit user plane data.

It should be understood that the network architecture 100 is merely a network architecture described from a perspective of the service-based architecture. In the service-based architecture, the PLMN may orderly combine a part or all of network functions based on a specific scenario requirement, to implement customization of a capability and a service of the network, to deploy dedicated networks for different services, that is, implement 5G network slicing (network slicing). With a network slicing technology, the operator can respond to customer requirements more flexibly and quickly, and support flexible allocation of network resources.

For ease of description, in embodiments of this application, the network functions (such as the NEF 131, ..., and the SMF 139) are collectively/briefly referred to as NFs. In other words, the NF described below in embodiments of this application may be replaced with any network function. In addition, in embodiments of this application, the session management function SMF 139 is referred to as the SMF for short, and the terminal device 110 is referred to as the UE. In other words, in embodiments of this application, the SMF described below may be replaced with the session management function, and the UE described below may be replaced with the terminal device. Some network functions are merely described as examples in FIG. 1, and the NF described below is not limited to the network functions shown in FIG. 1.

It should be understood that the AMF, the SMF, the UPF, the NEF, the AUSF, the NRF, the PCF, and the UDM shown in FIG. 1 may be understood as network elements in the core network that are configured to implement different functions, and for example, may be combined as required to form a network slice. These core network elements may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use a term in 5G, or may use another name.

Currently, to ensure network security, a primary authentication procedure needs to be performed on a terminal device that accesses a network, to be specific, authentication and authorization need to be performed on the terminal device. The terminal device can access the network only after the authentication succeeds.

FIG. 2 is a schematic flowchart of registration of UE with a network. As shown in FIG. 2, the method 200 includes the following plurality of steps. For a part that is not described in detail, refer to related descriptions in an existing protocol.

S210: The UE registers with the network.

For example, the UE sends an N1 message to a security anchor function (Security anchor function, SEAF), where the N1 message is for requesting to register with the network. Optionally, the N1 message may be a registration request message, and the registration request message carries a subscription concealed identifier (Subscription Concealed Identifier, SUCI) or a 5G globally unique temporary identifier (5G Globally Unique Temporary Identifier, 5G-GUTI) of the UE. The SEAF is co-located with an AMF. This may be understood as: The SEAF is a part of the AMF. In other words, the UE may send the registration request message to the AMF to request to register with the network.

Correspondingly, after receiving the N1 message from the UE, the SEAF may initiate authentication to the UE according to a local policy in any process of establishing a signaling connection to the UE.

For example, when the SEAF expects to start the authentication on the UE, the SEAF sends a Nausf_UEAuthentication_Authenticate Request message to an AUSF to invoke a Nausf_UEAuthentication service. The message carries a serving network name (serving network name, SN Name), and carries the SUCI or a SUPI. The SN name is for binding an anchor key to a serving network by using a serving network identifier (serving network identifier), to ensure that the anchor key is for secure communication between the UE and a 5G core network. It should be understood that, if the SEAF receives the SUCI from the UE, the message carries the SUCI; or if the SEAF receives the 5G-GUTI from the UE, the SEAF determines the SUPI based on the 5G-GUTI, and includes the SUPI in the message.

It should be understood that the SUPI includes a SUPI type (type) and a value. There are four SUPI types: an IMSI, an NSI (network specific identifier), a global line identifier (GLI), and a global cable identifier (GCI). There are two formats of the value of the SUPI: an IMSI and a NAI. In order not to expose the SUPI of a user on an air interface, a part other than the SUPI type in the SUPI is usually calculated to obtain a result, and the result is a part of the SUCI.

Correspondingly, after the AUSF receives the Nausf_UEAuthentication_Authenticate Request message from the SEAF, the AUSF may compare the SN name carried in the message with an expected SN name to check whether the SEAF that is in the serving network and that initiates the authentication request is authorized to use the SN name in the Nausf_UEAuthentication_Authenticate Request message. The AUSF may temporarily store the received serving network name. If the serving network is not authorized to use the SN name, the AUSF sends a Nausf_UEAuthentication_Authenticate Response message to the SEAF. The message indicates that "the serving network is not authorized", in other words, the SEAF may reject the registration procedure of the UE. If the serving network is authorized to use the SN name, the AUSF sends a Nudm_UEAuthentication_Get Request message to a UDM, where the Nudm_UEAuthentication_Get Request message is for requesting to perform primary authentication on the UE, and carries the SUCI/SUPI and the SN name.

Correspondingly, after the UDM receives the Nudm_UEAuthentication_Get Request message from the AUSF, if the message carries the SUCI, the UDM first needs to parse the message to obtain the SUPI, and then selects an authentication method, for example, a 5G-AKA authentication method or an EAP-AKA' authentication method, based on the SUPI.

It should be understood that a current 5G network supports two authentication methods: the 5G authentication and key agreement (5G Authentication and Key Agreement, 5G-AKA) authentication method and the extensible authentication protocol-authentication and key agreement (Extensible Authentication Protocol-authentication and key agreement, EAP-AKA') authentication method. How the UDM selects the authentication method based on the SUPI is not limited in this application. For example, an implementation in which the UDM selects the authentication method based on the SUPI includes: An operator may configure the authentication method in subscription data, and the UDM may determine the authentication method after obtaining the SUPI of the UE. Alternatively, the UDM selects the authentication method based on the SUPI type in the SUPI. For example, if the SUPI type is the IMSI, the 5G-AKA authentication method is selected. If the SUPI type is the NAI, the EAP-AKA' authentication method is selected.

S220: The UDM performs the primary authentication procedure.

For example, the UDM sends an authentication vector, for example, a 5G-AKA authentication vector or an EAP-AKA' authentication vector, to the AUSF in response to the authentication request message of the AUSF, to perform primary authentication on the UE. For a specific authentication implementation, refer to related descriptions in Chapter 6 of the existing protocol TS 33.501.

S230: Perform a primary authentication result confirmation procedure.

For example, an authentication result may be obtained through the foregoing primary authentication on the UE, and the AUSF and the UDM perform the primary authentication result confirmation procedure.

In an example, if the UDM selects the EAP-AKA' authentication method to perform authentication on the UE, after the AUSF receives an EAP-Response/AKA'-Challenge message from the UE or the SEAF and completes the authentication on the UE, the AUSF sends a Nudm_UEAuthentication_ResultConfirmation Request message to the UDM.

In another example, if the UDM selects the 5G-AKA authentication method to perform authentication on the UE, after the AUSF receives the Nausf_UEAuthentication_Authenticate Request message from the SEAF, and the authentication performed by the AUSF on the UE succeeds, the AUSF sends a Nudm_UEAuthentication_ResultConfirmation Request message to the UDM.

The Nudm_UEAuthentication_ResultConfirmation Request message carries an authentication status of the UE, where the authentication status includes the SUPI of the UE, an authentication timestamp, the authentication result (for example, an authentication success or failure), the authentication method (namely, an authentication type (for example, the EAP-AKA' authentication method or the 5G-AKA authentication method)), and the serving network name SN name. Optionally, to prevent fraud, the AUSF may include only information about the authentication success in the message according to an operator policy.

Correspondingly, the UDM stores the authentication status of the UE, where the authentication status includes the SUPI, the authentication timestamp, the authentication result, and the serving network name SN name.

It should be noted that the UE may separately register with different AMFs, for example, an AMF 1 and an AMF 2, by using a 3GPP access technology and a non-3GPP access technology. In other words, the AMF 1 and the AMF 2 may serve same UE. Through the foregoing registration and authentication procedure, the UDM stores an authentication result and an authentication timestamp twice, and stores information about an SN name #1 and an SN name #2. A quantity of AMFs is not limited in this application.

Further, the UDM sends a Nudm_UEAuthentication_ResultConfirmation Response message to the AUSF.

It should be understood that the UDM may detect and accept a spoofing attack of a specific type according to an operator policy. For example, the UDM stores an ID and time of a visited network. Optionally, the operator may classify visited networks. For example, in a first type, an AMF needs to immediately send a Nudm_UECM_Registration Request message; in a second type, it only needs to be checked that a Nudm_UECM_Registration Request message is received within a period of time shortly after completion of an authentication procedure; and in a third type, no check is needed. If the UDM receives a new Nudm_UECM_Registration Request message, the UDM checks whether a new visited network is the same as a previously stored visited network. If the visited networks are the same, the registration request is accepted. If the visited networks are different, a request reject message is sent, where the request reject message carries a cause value, and the cause value is for notifying an AMF that a Nausf_UEAuthentication_Authenticate Request message needs to be sent to the AUSF to trigger a primary authentication procedure.

S240: Optionally, perform a NAS SMC procedure.

It should be understood that the NAS SMC procedure aims to protect the registration request of the UE against a man-in-the-middle attack, and prevent an attacker from modifying an information element IE containing a UE security capability provided by the UE in the registration request.

For example, the AMF activates NAS integrity protection, and sends a NAS security mode command message to the UE. Correspondingly, after receiving the NAS security mode command message from the AMF, the UE needs to verify the NAS security mode command message, including checking whether UE security capabilities sent by the AMF match security capabilities stored in the UE, to ensure that the attacker does not modify these capabilities; and verifies integrity protection by using an indicated NAS integrity algorithm and a NAS integrity key based on K_{AMF} indicated by an ngKSI. In addition, after sending the NAS security mode command message, the AMF activates NAS uplink deciphering. If integrity of the NAS security mode command message is successfully verified, the UE should start NAS integrity protection and ciphering/deciphering by using a security context indicated by the ngKSI. Further, the UE sends a NAS security mode complete message to the AMF for ciphering and integrity protection, and the AMF activates NAS downlink ciphering.

S250: Perform a remaining registration procedure.

In the remaining registration procedure, the AMF may register with the UDM. This procedure is for registration, with the UDM, of the AMF that is serving the UE. After receiving registration information of the AMF, the UDM stores information related to the AMF, for example, an ID of the AMF. It should be noted that the UE may separately register with different AMFs, for example, the AMF 1 and the AMF 2, by using the 3GPP access technology and the non-3GPP access technology. In other words, the AMF 1 and the AMF 2 may serve the same UE. The UDM may store information related to a plurality of AMFs, for example, an ID of the AMF 1 and an ID of the AMF 2.

For example, the SEAF sends a registration response message to the UE, where the registration response message indicates that the registration of the UE succeeds, so that the UE can request to establish a session to access various services in a data network.

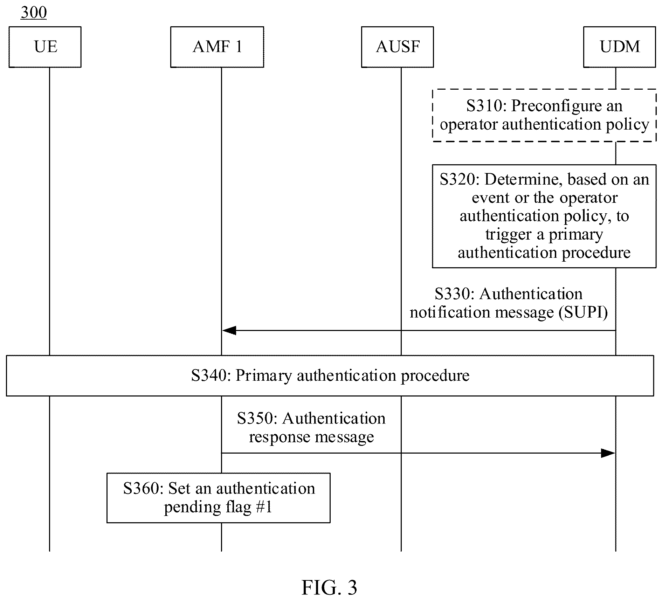

FIG. 3 is a diagram of initiating a primary authentication procedure by a home network (for example, a UDM in the home network). As shown in FIG. 3, the method 300 includes the following plurality of steps. For a part that is not described in detail, refer to related descriptions in an existing protocol.

S310: Optionally, a UDM preconfigures an operator authentication policy, to determine to initiate the network-triggered primary authentication procedure on UE.

S320: When determining to initiate the home network-triggered primary authentication procedure, the UDM determines an AMF 1 that serves the UE.

For example, the UDM determines, based on an event (for example, SoR/UPU or a request from an AAnF) or the authentication policy, to trigger and perform the authentication procedure of the home network on the UE. For example, the AAnF sends a Nudm_UECM_AuthTrigger request to the UDM to enable the UDM to perform primary authentication. Correspondingly, if the UDM determines, based on the received event and the preconfigured operator authentication policy, to initiate the home network-triggered primary authentication procedure on the UE, the UDM determines a serving AMF/SEAF of the UE.

It can be learned from the method 200 that the UE may register with the AMF 1 and an AMF 2 by using a 3GPP access technology or a non-3GPP access technology. This indicates that the UE is currently served by the AMF 1 and the AMF 2. That is, the UE is currently connected to the AMF 1 and the AMF 2, in other words, the UE may be found by using the AMF 1 and the AMF 2. Correspondingly, after the primary authentication, the UDM stores information about the AMF 1 and the AMF 2, for example, an ID of the AMF 1 and an ID of the AMF 2. To be specific, the UDM knows that the AMF 1 and the AMF 2 are serving the UE. When subsequently determining to trigger re-authentication on the UE, the UDM may find the AMF 1 and the AMF 2 that serve the UE. For example, the UDM selects, according to the operator authentication policy, the AMF 1 to perform re-authentication on the UE.

S330: The UDM sends an authentication notification message to the AMF 1. Correspondingly, the AMF 1 receives the authentication notification message from the UDM.

The authentication notification message is for requesting the AMF 1 to trigger the authentication on the UE, and the authentication notification message includes a SUPI of the UE.

Correspondingly, after receiving the authentication notification message from the UDM, the AMF 1 determines, based on a local authentication policy and a status of the UE, whether to trigger the primary authentication on the UE. If the primary authentication can be initiated, the AMF 1 determines to perform primary authentication on the UE.

S340: The AMF 1 performs the primary authentication procedure.

For a specific implementation in which the AMF 1 performs primary authentication, refer to the related descriptions in the method 200.

It should be noted that "authentication" and "authentication" in this application may be interchangeably used. For example, "primary authentication" may be replaced with "primary authentication", and "authentication pending flag" may be replaced with "authentication pending flag". For ease of description, "authentication", "primary authentication", "pending flag", and "authentication pending flag" are uniformly used below.

Further, the AMF 1 may send an authentication response message to the UDM.

S350: The AMF 1 sends the authentication response message to the UDM. Correspondingly, the UDM receives the authentication response message from the AMF 1.

The AMF 1 replies the authentication response message to the UDM in response to the authentication notification message. The authentication response message is for notifying whether the request of the UDM succeeds or fails. When the authentication response message does not carry a failure cause value, it means that the AMF can perform primary authentication on the UE, that is, perform the procedure of step S340. If the AMF 1 cannot perform the primary authentication procedure according to step S340, for example, when the UE is unreachable or the AMF 1 cannot find the UE, the authentication response message carries a failure cause value, where the failure cause value indicates that the AMF 1 is incapable of starting the primary authentication on the UE.

S360: The AMF 1 sets a pending flag.

For example, if the AMF 1 determines that the primary authentication on the UE cannot be performed, for example, the UE is unreachable, the AMF 1 sets a pending flag #1 in a context of the UE. It should be understood that the pending flag #1 indicates that when the UE re-registers with or re-accesses the AMF 1, or the UE is reachable, the AMF 1 first needs to perform primary authentication on the UE based on the locally set pending flag.

It should be understood that if the AMF 1 sends the authentication response message to the UDM, where the authentication response message indicates that the AMF 1 is incapable of starting the primary authentication on the UE, the UDM may check whether the other AMF that serves the UE exists, for example, determine the AMF 2 by using the locally stored ID of the AMF 2. In this case, the UDM sends an authentication notification message to the AMF 2, where the authentication notification message is for requesting the AMF 2 to perform primary authentication on the UE. For a specific implementation, refer to the foregoing related descriptions. If the AMF 2 is incapable of starting the primary authentication on the UE either, the AMF 2 sends an authentication response message to the UDM, where the authentication response message carries a failure cause value indicating that the AMF 2 is incapable of starting the primary authentication procedure on the UE. In addition, the AMF 2 may set a pending flag #2 in a context of the UE. In this case, because neither the AMF 1 nor the AMF 2 is capable of starting the primary authentication on the UE, the pending flags are locally set on both the AMF 1 and the AMF 2.

Optionally, when the UE re-accesses or re-registers with the AMF 1 or when the UE is reachable, the AMF 1 sends a re-authentication request to the UDM via an AUSF after checking that the pending flag #1 is locally set. If re-authentication on the UE is complete, or after the AMF determines to perform a primary authentication procedure, the AMF 1 cancels (deletes or resets) the pending flag #1. When the UE accesses a new AMF 3 (for example, in a mobility scenario), the AMF 3 may retrieve the context of the UE from the original AMF 1 or AMF 2, determine the pending flag for the UE, and perform a re-authentication procedure.

It should be noted that an execution sequence of step S340, step S350, and step is not limited.

Considering that the pending flags are locally set on both the AMF 1 and the AMF 2, when the UE separately accesses the AMF 1 and the AMF 2 again, both the AMF 1 and the AMF 2 trigger primary authentication procedures on the UE based on the respective pending flags. Because the two pending flags are set based on the request of the same UDM, and the UDM essentially needs only one time of authentication on the UE, it is unnecessary to perform two times of primary authentication on the UE, and unnecessary signaling overheads are caused.

In view of this, this application provides a communication method and a communication apparatus. A home network element determines, based on a received second authentication response message, that a second mobility management function network element is capable of starting primary authentication on a terminal device, and may send a first notification message to a first mobility management function network element that serves the terminal device, where the first notification message is for notifying the first mobility management function network element to delete or reset a pending flag, or is for notifying the first mobility management function network element to cancel or terminate the primary authentication procedure performed by a home network, to avoid subsequently triggering a re-authentication procedure on the terminal device, and reduce signaling overheads.

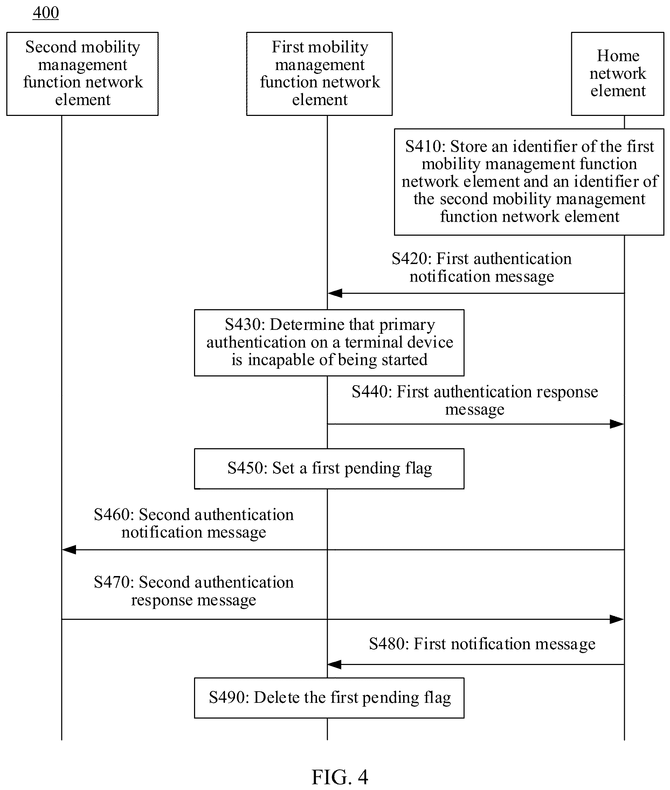

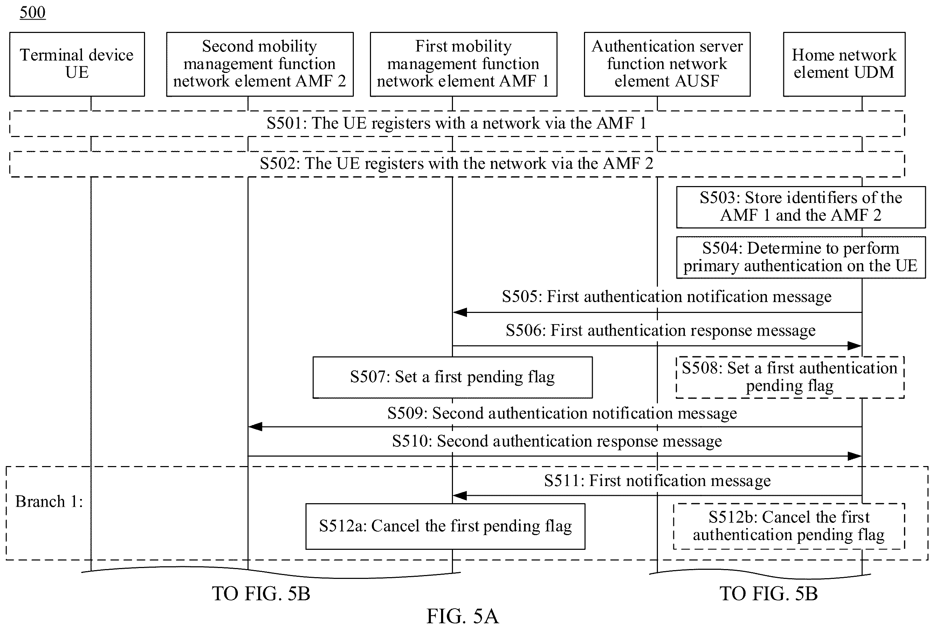

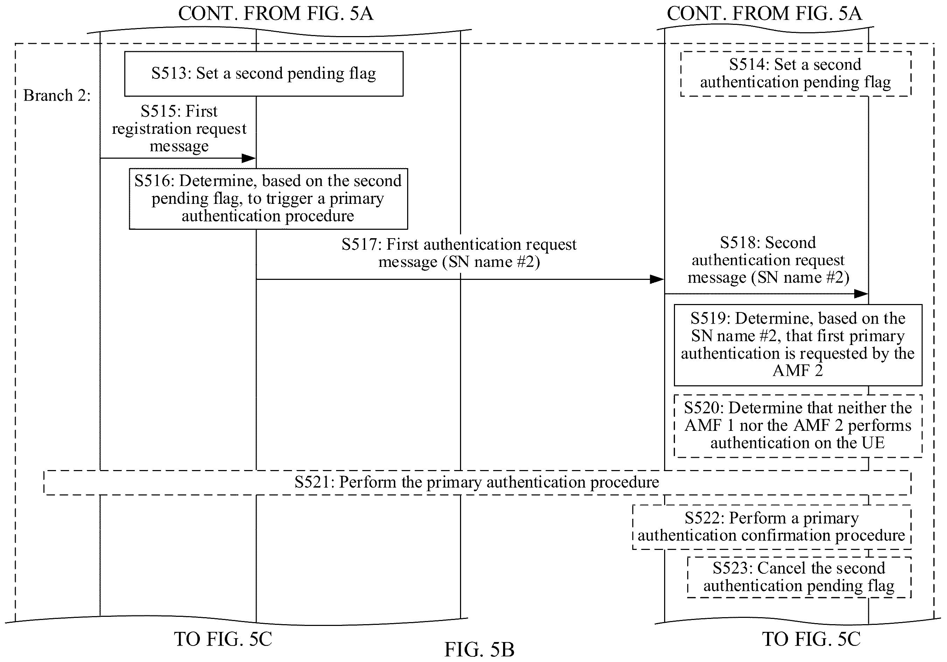

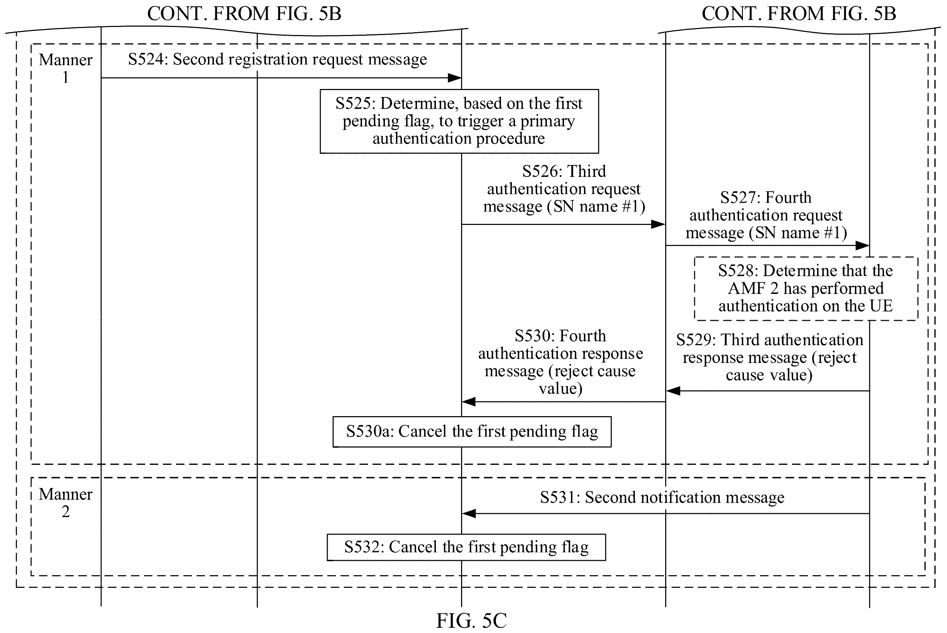

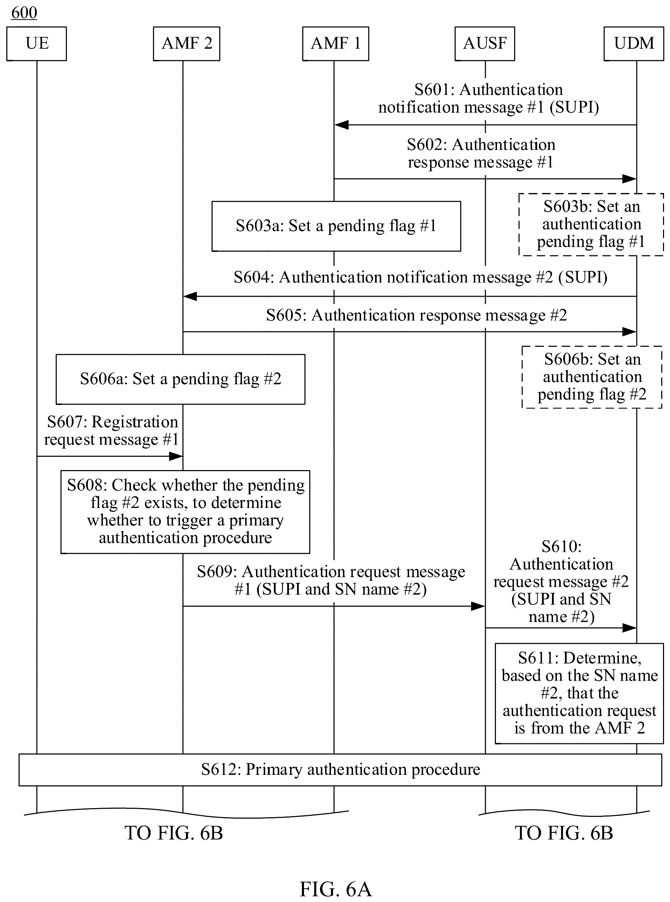

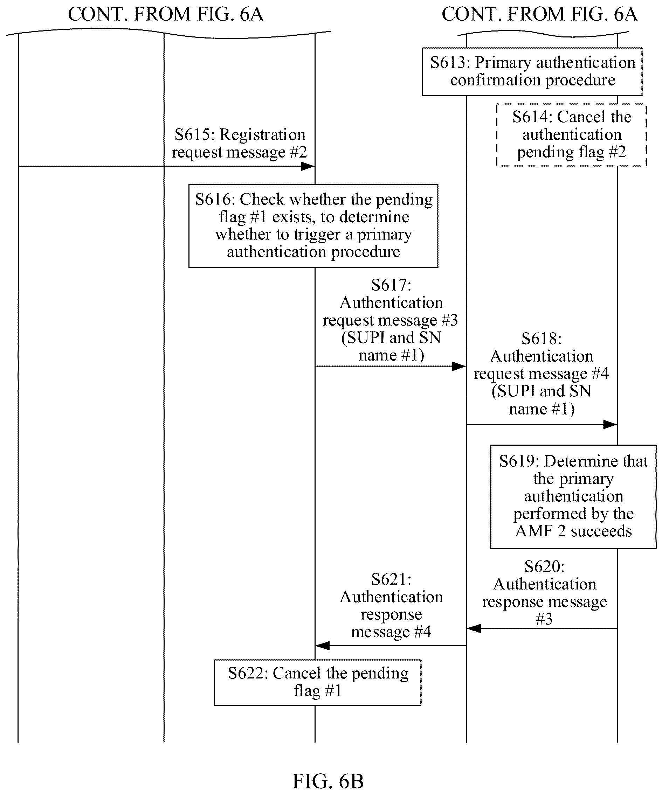

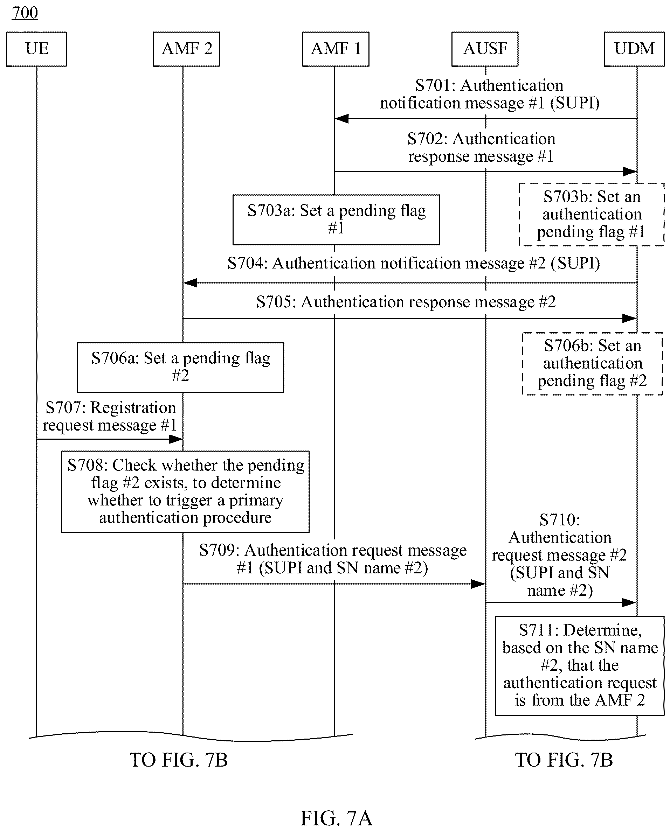

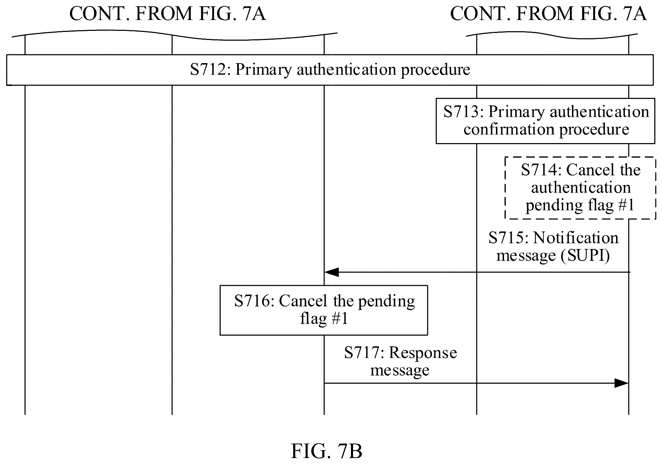

With reference to the accompanying drawings, the following describes in detail the communication method provided in embodiments of this application. Embodiments provided in this application are applicable to any communication scenario in which a transmitting-end device communicates with a receiving-end device, for example, may be applied to the communication system shown in FIG. 1. This application provides the following methods shown in FIG. 4 to FIG. 7B. It should be understood that method embodiments shown in FIG. 4 to FIG. 7B may be combined with each other, and steps in the method embodiments shown in FIG. 4 to FIG. 7B may be mutually referenced. For example, in embodiments of this application, the method embodiments shown in FIG. 5A to FIG. 7B may be considered as possible implementations of implementing functions in the method embodiment shown in FIG. 4. FIG. 6A and FIG. 6B mainly describe a case in which after learning that an AMF 1 can currently perform primary authentication on UE and after receiving an authentication request initiated by an AMF 2 that serves the UE, a UDM rejects the authentication request of the AMF 2. FIG. 7A and FIG. 7B mainly describe a case in which after learning that an AMF 1 can perform primary authentication on UE, a UDM sends, based on locally stored information about a plurality of AMFs that serve the UE, the notification message for canceling the pending flag to the AMF 2 that does not trigger an authentication request, to avoid triggering a redundant authentication procedure.

FIG. 4 is a schematic flowchart of a communication method 400 according to an embodiment of this application. As shown in FIG. 4, a procedure for the method may be performed by a home network element, a first mobility management function network element, and a second mobility management function network element, or may be performed by modules and/or components (for example, chips or integrated circuits) that are installed in the home network element, the first mobility management function network element, and the second mobility management function network element and that have corresponding functions. This is not limited in this application. For ease of description, the following uses the home network element, the first mobility management function network element, and the second mobility management function network element as execution bodies for description. The method includes the following plurality of steps. For a part that is not described in detail, refer to related descriptions in an existing protocol.

S410: When a terminal device registers with a network separately via the first mobility management function network element and the second mobility management function network element, the home network element stores an identifier of the first mobility management function network element and an identifier of the second mobility management function network element.

In an implementation, the terminal device separately accesses the first mobility management function network element and the second mobility management function network element by using a 3GPP access technology and a non-3GPP access technology, to register with the network. For a specific implementation, refer to the related descriptions in the method 200. In a process in which the terminal device register with the network separately via the first mobility management function network element and the second mobility management function network element and an authentication procedure occurs, the first mobility management function network element and the second mobility management function network element may use a same authentication server function network element or different authentication server function network elements.

S420: The home network element sends a first authentication notification message to the first mobility management function network element when determining that primary authentication needs to be performed on the terminal device, where the first authentication notification message is for requesting to trigger the primary authentication on the terminal device.

For a specific implementation in which the home network element determines that the primary authentication needs to be performed on the terminal device, refer to the related descriptions of step S320 in the method 300.

For example, the first authentication notification message includes an identifier, for example, a SUPI, of the terminal device. It should be understood that, when the home network element stores the identifiers of both the first mobility management function network element and the second mobility management function network element, how the home network element preferentially selects the first mobility management function network element to initiate an authentication request is not limited in this embodiment of this application.

S430: The first mobility management function network element determines that the primary authentication on the terminal device is incapable of being started.

That the primary authentication on the terminal device is incapable of being started may be understood as: The terminal device is unreachable, or the first mobility management function network element does not find the terminal device.

For example, after receiving the first authentication notification message, the first mobility management function network element determines, based on a local authentication policy and a status of the terminal device, whether to trigger the primary authentication on the terminal device. For example, if the first mobility management function network element finds that the terminal device is unreachable, or the first mobility management function network element does not find the terminal device, the first mobility management function network element sends a first authentication response message to the home network element.

S440: The home network element receives the first authentication response message from the first mobility management function network element, where the first authentication response message indicates that the first mobility management function network element is incapable of starting the primary authentication on the terminal device.

For example, the first authentication response message includes a first cause value, and the first cause value indicates that the first mobility management function network element is incapable of starting the primary authentication on the terminal device. For example, the failure cause value may indicate that the primary authentication on the terminal device fails to be started, or the failure cause value may indicate that the terminal device is unreachable. A definition and a value setting manner of the failure cause value are not limited in this embodiment.

Optionally, the home network element may set a first authentication pending flag based on the first cause value, where the first authentication pending flag indicates that a first pending flag is set on the first mobility management function network element. For example, the home network element may know, based on the first cause value, that the terminal device is unreachable or the first mobility management function network element fails to start the primary authentication on the terminal device, may set the first authentication pending flag, and may associate the first authentication pending flag with the first mobility management function network element, for example, associate the first authentication pending flag with one or more of an ID of the first mobility management function network element, a serving network in which the first mobility management function network element is located, or a PLMN ID corresponding to the first mobility management function network element. For a specific implementation, refer to related descriptions in the method 500.

Optionally, the home network element sets the first authentication pending flag only when receiving a specific failure cause value. For example, the home network element sets the first authentication pending flag when the failure cause value received by the home network element indicates that the terminal device is unreachable.

It should be understood that the home network element may explicitly or implicitly set the first authentication pending flag based on the first cause value. For example, the first authentication pending flag may be indicated by a bit. For example, 1 indicates that the authentication pending flag is valid, and 0 indicates that the authentication pending flag is invalid. In this case, when determining that the first mobility management function network element is incapable of starting the primary authentication on the terminal device, the home network element may change the first authentication pending flag from 0 to 1. For another example, if the first authentication pending flag is valid when being present, and is invalid when being absent, when determining that the first mobility management function network element is incapable of starting the primary authentication on the terminal device, the home network element stores an association relationship among the first authentication pending flag, the first mobility management function network element, and the terminal device.

S450: The first mobility management function network element sets the first pending flag.

For example, if the first mobility management function network element determines that the primary authentication on the terminal device is incapable of being started, the first mobility management function network element sets the first pending flag (pending flag) in a context of the terminal device.

It should be understood that the first pending flag indicates that when the terminal device re-registers with the network via the first mobility management function network element or the terminal device is reachable, the first mobility management function network element determines, based on the locally set first pending flag, to perform authentication on the terminal device.

It should be noted that an execution sequence of steps S440 and S450 is not limited in this application.

S460: The home network element sends a second authentication notification message to the second mobility management function network element in response to the first authentication response message, where the second authentication notification message is for requesting to trigger the primary authentication on the terminal device.

For example, the home network element first determines whether there are a plurality of mobility management function network elements that serve the terminal device, and it can be learned from the foregoing solutions that there are two mobility management function network elements. In this case, when determining that the second mobility management function network element also serves the terminal device, the home network element continues to perform the home network-triggered primary authentication procedure, and performs step S460.

S470: The home network element receives a second authentication response message from the second mobility management function network element.

The second authentication response message indicates whether the second mobility management function network element performs the primary authentication procedure on the UE. In other words, the second authentication response message may be used by the home network element to determine whether the second mobility management function network element is capable of performing primary authentication on the terminal device. For example, if it is determined that the primary authentication is capable of being performed on the terminal device, the following steps S480 and S490 are performed. If it is determined that the primary authentication is incapable of being performed on the terminal device, the home network element may locally set a second authentication pending flag. In this case, it indicates that neither of the two mobility management function network elements that serve the terminal device is capable of performing primary authentication on the terminal device, and the pending flags are locally set on the two mobility management function network elements. This specifically corresponds to a branch 2 in the following method 500. For a specific implementation, refer to related descriptions in the methods 500 to 700. Details are not described herein.

For example, in step S460, the second mobility management function network element determines, based on a local authentication policy and the status of the terminal device, whether to perform the primary authentication procedure on the terminal device. For a specific implementation, refer to the related descriptions in the method 300. If the second mobility management function network element is incapable of starting the primary authentication on the terminal device, the second authentication response message carries a reject cause value, and the reject cause value indicates that the primary authentication on the UE fails or indicates that the terminal device is unreachable. If the second mobility management function network element is capable of starting the primary authentication on the terminal device, the second authentication response message does not carry a reject cause value, and is for notifying the home network element that the second authentication notification message has been received.

It may be understood that the determining that the second mobility management function network element is capable of performing primary authentication on the terminal device includes either of the following cases: The second authentication response message carries an acknowledgment message for the second authentication notification message; or the second authentication response message does not carry a second cause value, where the second cause value indicates that the second mobility management function network element is incapable of starting the primary authentication on the terminal device. The first notification message may be sent after the primary authentication performed by the second mobility management function network element on the terminal device succeeds or in a process in which the second mobility management function network element performs primary authentication on the terminal device. In other words, an occasion for sending the first notification message is not specifically limited in this application.

S480: The home network element sends a first notification message to the first mobility management function network element when determining, based on the second authentication response message, that the second mobility management function network element is capable of starting the primary authentication on the terminal device.

The first notification message has an indication function, or carries a cause value having an indication function, that is, indicates the first mobility management function network element to cancel the first pending flag, where the first pending flag indicates that the primary authentication on the terminal device needs to be triggered. Alternatively, the first notification message indicates the first mobility management function network element to cancel or terminate the primary authentication procedure performed by a home network.

The canceling the first pending flag may be understood as that the first pending flag becomes invalid. If the first pending flag is indicated by a bit, for example, 1 indicates that the first pending flag is valid, and 0 indicates that the first pending flag is invalid, the first mobility management function network element changes the first pending flag from 1 to 0. Alternatively, if the first pending flag is valid when being present, and is invalid when being absent, the first mobility management function network element deletes the first pending flag. Another case is not enumerated.

In this embodiment of this application, the first notification message is implemented in a plurality of manners. For example, the first notification message may be an authentication notification message that carries a cause value, a first notification message that carries a cause value, or a first notification message that does not carry a cause value. The cause value may indicate that the second mobility management function network element has performed primary authentication on the terminal device, indicate that the primary authentication on the terminal device is being performed, indicate that the primary authentication on the terminal device succeeds, indicate the first mobility management function network element to delete the first pending flag, or indicate the first mobility management function network element not to subsequently trigger the primary authentication procedure on the terminal device based on the locally set first pending flag, that is, indicate the first mobility management function network element to cancel or terminate the primary authentication procedure performed by the home network.

For example, after receiving the second authentication response message that does not carry the failure cause value, the home network element may determine that the second mobility management function network element is capable of performing the primary authentication procedure on the terminal device. Further, the home network element determines whether to send the first notification message to the first mobility management function network element. For example, the home network element determines whether the first mobility management function network element exists; and if the first mobility management function network element exists, the home network element further determines whether to send the first notification message to the first mobility management function network element. In other words, the home network element may first determine whether the first mobility management function network element exists, and then determine whether the first notification message needs to be sent; or may first determine whether the first notification message needs to be sent, and then determine whether the first mobility management function network element exists. This is not limited in this application.

For example, when it is determined that the first notification message needs to be sent, the first notification message may be sent, where the first notification message is for notifying to cancel or terminate the home network-triggered primary authentication procedure, or is for notifying that the pending flag that is set on the first mobility management function network element can be canceled.

For example, when the first notification message does not need to be sent, the determining action may not be performed. The home network element may determine, according to a locally preconfigured policy, whether to send the first notification message to the first mobility management function network element. Alternatively, the home network element may determine, depending on whether the first authentication pending flag corresponding to the first mobility management function network element is locally set, whether to send the first notification message to the first mobility management function network element. Alternatively, the home network element determines, based on the locally stored identifier of the first mobility management function network element, to send the first notification message to the first mobility management function network element.

S490: The first mobility management function network element deletes the first pending flag, or cancels or terminates the primary authentication procedure performed by the home network.

For example, based on the first notification message or the cause value carried in the first notification message, the first mobility management function network element cancels (for example, deletes or resets) the first pending flag, or determines to cancel or terminate requesting for execution of the primary authentication procedure from the home network.

The canceling the first pending flag may be understood as that the first pending flag becomes invalid. If the first pending flag is indicated by a bit, for example, 1 indicates that the first pending flag is valid, and 0 indicates that the first pending flag is invalid, the first mobility management function network element changes the first pending flag from 1 to 0. Alternatively, if the first pending flag is valid when being present, and is invalid when being absent, the first mobility management function network element deletes the first pending flag. Another case is not enumerated.

According to the solution provided in this application, the home network element determines, based on the received second authentication response message, that the second mobility management function network element is capable of starting the primary authentication on the terminal device, and may send the notification message to the first mobility management function network element that serves the terminal device, where the notification message is for notifying the first mobility management function network element to delete or reset the pending flag or cancel or terminate the primary authentication procedure performed by the home network, to avoid subsequently triggering a re-authentication procedure on the terminal device, and reduce signaling overheads.

FIG. 5A to FIG. 5C are a schematic flowchart of a communication method 500 according to an embodiment of this application. As shown in FIG. 5A to FIG. 5C, a procedure for the method may be performed by a home network element (for example, a UDM), an AMF 1, an AMF 2, an authentication server function network element (for example, an AUSF), and a terminal device (for example, UE), or may be performed by modules and/or components (for example, chips or integrated circuits) that are installed in the UDM, the AMF 1, the AMF 2, the AUSF, and the UE and that have corresponding functions. This is not limited in this application. For ease of description, the following uses the UDM, the AMF 1, the AMF 2, the AUSF, and the UE as execution bodies for description. The method includes the following plurality of steps. For a part that is not described in detail, refer to related descriptions in an existing protocol.

S501: The UE registers with a network via the AMF 1.

S502: The UE registers with the network via the AMF 2.

For example, the UE separately accesses the AMF 1 and the AMF 2 by using a 3GPP access technology and a non-3GPP access technology, to register with the network. For a specific implementation, refer to the related descriptions in the method 200. In a process in which the UE registers with the network separately via the AMF 1 and the AMF 2 and an authentication procedure occurs, the AMF 1 and the AMF 2 may use a same AUSF or different AUSFs.

It should be understood that, that the UE registers with the network via the AMF 1 or the AMF 2 means: The UE has performed a registration procedure with the AMF 1 or the AMF 2, and the AMF 1 or the AMF 2 has context information of the UE after the registration of the UE succeeds.

S503: The UDM stores information about the AMF 1 and the AMF 2.

For example, the UDM stores an ID of the AMF 1 and an ID of the AMF 2 when the UE registers with the AMF 1 and the AMF 2. An ID of an AMF may have a plurality of implementations, for example, an ID of a PLMN in which the AMF is located or a serving PLMN ID. For another example, the ID of the AMF is a globally unique AMF identifier (globally unique AMF identifier, GUAMI).

S504: The UDM determines to initiate a home network-triggered primary authentication procedure.

For specific implementation, refer to the related descriptions of step S320 in the method 300.

S505: The UDM sends a first authentication notification message to the AMF 1. Correspondingly, the AMF 1 receives the first authentication notification message from the UDM. The first authentication notification message is for requesting to trigger a third primary authentication procedure on the UE. The first authentication notification message includes a SUPI of the UE.

For example, the UDM initiates the home network-triggered primary authentication procedure according to an operator authentication policy, and chooses to trigger the primary authentication procedure by using the AMF 1. In this case, the UDM sends the first authentication notification message to the AMF 1. When the UDM stores both the AMF 1 and the AMF 2, how the UDM preferentially selects the AMF 1 is not limited in this embodiment of this application.

S506: The AMF 1 sends a first authentication response message to the UDM. Correspondingly, the UDM receives the first authentication response message from the AMF 1.

The first authentication response message carries a failure cause value, where the failure cause value indicates that the AMF 1 is incapable of starting the primary authentication on the UE.

For example, after receiving the first authentication notification message, the AMF 1 determines, based on a local authentication policy and a status of the UE, whether to trigger the primary authentication on the UE. For example, if the AMF 1 finds that the UE is unreachable, or the AMF 1 does not find the UE, the AMF 1 sends the first authentication response message to the UDM, and includes the failure cause value in the first authentication response message. The failure cause value indicates that the AMF 1 is incapable of starting the primary authentication on the UE. For example, the failure cause value may indicate that the primary authentication on the UE fails to be started, or the failure cause value may indicate that the UE is unreachable. A definition and a value setting manner of the failure cause value are not limited in this embodiment.

S507: The AMF 1 sets a first pending flag (pending flag).

For example, if the AMF 1 determines that the primary authentication procedure on the UE is incapable of being started, the AMF 1 sets the first pending flag in a context of the UE. It should be understood that the first pending flag indicates that when the UE re-registers with or re-accesses the network via the AMF 1 or the UE is reachable, the AMF 1 determines, based on the locally set first pending flag, to perform authentication on the UE.

It should be noted that an execution sequence of steps S506 and S507 is not limited in this application.

S508: Optionally, the UDM sets a first authentication pending flag.

This step may be performed explicitly or implicitly.

For example, the UDM may determine, based on the failure cause value in the first authentication response message of the AMF 1, that the primary authentication on the UE fails to be started. For example, the failure cause value may indicate that the UE is unreachable or the AMF 1 does not find the UE, and consequently the primary authentication procedure on the UE is incapable of being started. Correspondingly, after obtaining the failure cause value, the UDM sets the first authentication pending flag based on the failure cause value, and may associate the first authentication pending flag with the AMF 1. The first authentication pending flag indicates that the UDM has requested the AMF 1 to trigger the primary authentication procedure and the AMF 1 sets the first pending flag because the AMF 1 is incapable of starting the primary authentication procedure on the UE. In other words, the first authentication pending flag indicates that the AMF 1 is incapable of starting the primary authentication procedure on the UE, the first authentication pending flag indicates that the first pending flag is set on the AMF 1, or the first authentication pending flag indicates that the UE is unreachable or the AMF 1 does not find the UE, and another indication is not enumerated. This is not limited in this application.

It should be understood that the setting of the first authentication pending flag helps the UDM subsequently determine that the first pending flag is set on the AMF 1 associated with the first authentication pending flag and the AMF 1 has not performed the primary authentication procedure on the UE. Optionally, further, the UDM sets the first authentication pending flag only when receiving a specific failure cause value. For example, the UDM sets the first authentication pending flag when the failure cause value received by the UDM indicates that the UE is unreachable. The first authentication pending flag is associated with the AMF 1 in a plurality of manners. For example, the UDM associatively stores the first authentication pending flag and the ID of the AMF 1. For another example, the UDM associatively stores the first authentication pending flag and a first serving network name SN name #1 corresponding to the ID of the AMF 1. For another example, the UDM stores the first authentication pending flag and a PLMN ID #1 corresponding to the ID of the AMF 1. For another example, the UDM associatively stores the first authentication pending flag and at least two parameters in the ID of the AMF 1, an SN name #1, and a PLMN ID #1 corresponding to the AMF 1.

For example, if the first authentication pending flag is explicitly stored, the first authentication pending flag may be indicated by a bit. For example, 1 indicates that the authentication pending flag is valid, and 0 indicates that the authentication pending flag is invalid. In this case, when determining that the AMF 1 triggers the primary authentication on the UE, the UDM may change the first authentication pending flag from 1 to 0.

For example, if the first authentication pending flag is implicitly stored, the first authentication pending flag is valid when being present, and is invalid when being absent. In this case, when determining that the AMF 1 triggers the primary authentication on the UE, the UDM may delete the first authentication pending flag.

It should be understood that the foregoing manner of associating the first authentication pending flag with the AMF 1 and representation form of the authentication pending flag are merely examples. This is not specifically limited in this application.

For example, if the first authentication pending flag is explicitly stored, the UDM may subsequently check whether the other AMF that serves the UE exists. In addition, when it is determined that the other AMF exists, because the UDM knows that there are two AMFs that serve the UE, when determining that the AMF 1 fails to start the primary authentication, the UDM may request the other AMF, for example, the AMF 2, that serves the UE, to perform the primary authentication procedure. In this case, the UDM needs to implicitly record or know that the home network-triggered primary authentication procedure has been performed by using the AMF 1 and the failure cause value has been received from the AMF 1.

S509: The UDM sends a second authentication notification message to the AMF 2. Correspondingly, the AMF 2 receives the second authentication notification message from the UDM. The second authentication notification message is for requesting to trigger a fourth primary authentication procedure on the UE, and the second authentication notification message includes the SUPI of the UE.

For example, as described in step S508, when the UDM determines that the AMF 2 also serves the UE, the UDM continues to perform the home network-triggered primary authentication procedure, and determines to initiate a request to the AMF 2.

S510: The AMF 2 sends a second authentication response message to the UDM. Correspondingly, the UDM receives the second authentication response message from the AMF 2.

The second authentication response message indicates whether the AMF 2 performs the primary authentication procedure on the UE. For example, the AMF 2 determines, based on a local authentication policy and the status of the UE, whether to perform the primary authentication procedure on the UE. For a specific implementation, refer to the related descriptions in the method 300. If the AMF 2 is incapable of performing primary authentication on the UE, the AMF 2 includes a reject cause value in the second authentication response message, where the reject cause value indicates that the primary authentication on the UE fails. If the AMF 2 is capable of performing primary authentication on the UE, the second authentication response message does not carry a reject cause value, and is for notifying the UDM that the second authentication notification message has been received.

According to the foregoing solution, the AMF 1 is currently incapable of performing the primary authentication procedure on the UE, and the first pending flag is locally set on the AMF 1. Optionally, the first authentication pending flag is locally set on the UDM.

With reference to a branch 1 and a branch 2, the following specifically describes whether the AMF 2 is capable of performing the primary authentication procedure on the UE, how the UDM determines a specific AMF that requests a primary authentication procedure, and which AMF is notified to cancel a pending flag, in other words, how the UDM determines an AMF that is currently serving the UE.

Branch 1: The AMF 2 is capable of starting the primary authentication procedure on the UE.

S511: The UDM sends a first notification message to the AMF 1. Correspondingly, the AMF 1 receives the first notification message from the UDM.

Before step S511 is performed, the UDM receives the message in S510, and the second authentication response message in step S510 is for notifying that the second authentication notification message is received. Correspondingly, after receiving the second authentication response message, the UDM determines that the AMF 2 is capable of performing the primary authentication procedure on the UE.

Further, optionally, the UDM determines whether to send a notification message to the other AMF. For example, the UDM determines whether the other AMF exists. If the other AMF exists, the UDM further determines whether to send the notification message to the AMF. In other words, the UDM may first determine whether the other AMF exists, and then determine whether the notification message needs to be sent; or may first determine whether the notification message needs to be sent, and then determine whether the other AMF exists. When the notification message needs to be sent, the notification message may be sent, where the notification message is for notifying to cancel or terminate the home network-triggered primary authentication procedure, or is for notifying that a pending flag that is set on the AMF can be canceled. When the notification message does not need to be sent, the determining action may not be performed. The UDM may determine, according to a locally preconfigured policy, whether to send the notification message to the AMF. The preconfigured policy may be a local policy preconfigured by an operator, or the function may be implemented by product code. The preconfigured policy is not specifically limited in this embodiment. Alternatively, the UDM may determine, depending on whether an authentication pending flag for the other AMF is locally set, whether to send the notification message to the other AMF. Alternatively, the UDM determines, based on a locally stored ID of the other AMF that serves the UE, to send the notification message to the other AMF.

In this embodiment, the UDM determines whether the notification message needs to be sent to the AMF 1. For example, if the UDM determines that the AMF 1 may also serve the UE, the UDM further determines whether the first authentication pending flag is explicitly stored locally, or implicitly knows whether the home network-triggered primary authentication procedure has been performed by using the AMF 1 and the failure cause value has been received from the AMF 1. If the first authentication pending flag exists, or the UDM knows that the failure cause value has been received from the AMF 1, the UDM sends the first notification message to the AMF 1. The first notification message indicates to cancel or terminate the home network-triggered primary authentication procedure, or is for notifying that the pending flag that is set on the AMF can be canceled.

Optionally, the first notification message has an indication function, or carries a cause value having an indication function. To be specific, the first notification message is implemented in a plurality of manners. For example, the first notification message may be an authentication notification message that carries a cause value, a first notification message that carries a cause value, or a first notification message that does not carry a cause value. The cause value may indicate that the AMF 2 has performed primary authentication on the UE, indicate that the primary authentication on the UE is being performed, indicate that the primary authentication on the UE succeeds, indicate the AMF 1 to delete the first pending flag, or indicate the AMF 1 not to request the primary authentication on the UE based on the locally set first pending flag.

S512a: The AMF 1 cancels the first pending flag.

For example, after receiving the first notification message, the AMF 1 cancels the first pending flag based on the first notification message. For example, the first pending flag is canceled based on the first notification message or the cause value carried in the first notification message.

The canceling the first pending flag may be understood as that the first pending flag becomes invalid. If the first pending flag is indicated by a bit, for example, 1 indicates that the first pending flag is valid, and 0 indicates that the first pending flag is invalid, the AMF 1 changes the first pending flag from 1 to 0. Alternatively, if the first pending flag is valid when being present, and is invalid when being absent, the AMF 1 deletes the first pending flag.

S512b: Optionally, the UDM cancels the first authentication pending flag.

The canceling the first authentication pending flag may be understood as that the first authentication pending flag becomes invalid. If the first authentication pending flag is indicated by a bit, for example, 1 indicates that the first authentication pending flag is valid, and 0 indicates that the first authentication pending flag is invalid, the UDM changes the first authentication pending flag corresponding to the AMF 1 from 1 to 0. Alternatively, if the first authentication pending flag is valid when being present, and is invalid when being absent, the UDM deletes the first authentication pending flag corresponding to the AMF 1.

For example, if the UDM locally sets the first authentication pending flag in step S508 after receiving, from the AMF 1, the message indicating that the authentication on the UE fails, the UDM may delete the previously set first authentication pending flag after determining that the AMF 2 is capable of performing the primary authentication procedure on the UE. For example, the first authentication pending flag may be canceled after the second authentication response message is received, where the second authentication response message does not carry the failure cause value; the first authentication pending flag may be canceled after it is determined that the authentication on the UE succeeds; or the first authentication pending flag may be canceled in a process of performing authentication on the UE. A specific occasion for canceling the first authentication pending flag is not limited in this embodiment.

It should be noted that step S512b may be performed before step S511, may be performed during step S511, or may be performed after step S511 and before step S512a.

In other words, according to the foregoing solution, after determining that the AMF 2 that serves the UE triggers the primary authentication on the UE, the UDM may send the notification message to the AMF 1 based on the stored information about the AMF 1 and the AMF 2 that serve the UE, to prevent the AMF 1 from triggering re-authentication on the UE due to the locally set first pending flag when the UE subsequently accesses the AMF 1 again. This reduces an unnecessary UE authentication procedure and reduces signaling overheads.

Branch 2: The AMF 2 is incapable of starting the primary authentication procedure on the UE.

S513: The AMF 2 sets a second pending flag (pending flag).

For a specific implementation, refer to the related descriptions of step S507.

Correspondingly, the second authentication response message in step S510 carries the reject cause value. In this case, for a specific implementation of step S510, refer to the related descriptions of step S506.

S514: Optionally, the UDM sets a second authentication pending flag.

For a specific implementation, refer to the related descriptions of step S508.

According to the foregoing solution, neither the AMF 1 nor the AMF 2 that serves the UE triggers the authentication on the UE, the first pending flag is locally set on the AMF 1, and the second pending flag is locally set on the AMF 2. Optionally, the first authentication pending flag and the second authentication pending flag are locally set on the UDM.

It should be understood that because the second pending flag is locally set on the AMF 2, when the UE accesses the AMF 2 again, the AMF 2 triggers the authentication on the UE based on the second pending flag.

S515: The UE sends a first registration request message to the AMF 2. Correspondingly, the AMF 2 receives the first registration request message from the UE.

The first registration request message carries a 5G-GUTI of the UE.

S516: The AMF 2 determines, based on the second pending flag, to trigger the primary authentication procedure.

For example, when the AMF 2 locally detects that the AMF 2 has the second pending flag, the AMF 2 needs to trigger the primary authentication procedure, that is, perform the following step S517.

It should be noted that steps S515 and S516 are described for a case in which the UE accesses the network again via the AMF 2 and then the AMF 2 triggers the primary authentication procedure based on the second pending flag. Optionally, the UE may alternatively send a registration request to another AMF, for example, an AMF 4, in an operator network in which the AMF 2 is located, in other words, request to access the network via the AMF 4. It should be understood that when the UE initiates the registration request to the AMF 4, the AMF 4 obtains the second pending flag from the AMF 2, and triggers the primary authentication procedure on the UE based on the second pending flag. Therefore, the second pending flag is used by the AMF 4. In other words, in this embodiment, after failing to access the network via the AMF 2, the UE may not necessarily access the network again via the AMF 2, but may access the network via the AMF 4 in the operator network in which the AMF 2 is located. For ease of description, an example in which the UE accesses the network via the same AMF, namely, the AMF 2, is used in this embodiment of this application for description. It should be understood that if the UE requests to access the network via the AMF 4 after failing to access the network via the AMF 2, the AMF 4 may obtain a related parameter, for example, the second pending flag, in a context of the UE on the AMF 2, and trigger the primary authentication on the UE. A specific implementation is similar to the manner in which the AMF 2 triggers the primary authentication. Details are not described herein.

S517: The AMF 2 sends a first authentication request message to the AUSF. Correspondingly, the AUSF receives the first authentication request message from the AMF 2.

For example, the AMF 2 selects an AUSF, and sends a Nausf_UEAuthentication_Authenticate Request message to the AUSF. For a specific implementation, refer to the related descriptions of step S210 in the method 200.

The first authentication request message is for requesting to perform first primary authentication on the UE. The first authentication request message includes the SUPI of the UE and a second serving network name SN name #2. For the SN name #2, refer to the related descriptions of step S210 in the method 200. It should be noted that if the UE accesses the AMF 4, the SN name #2 may still be used in the first authentication request message; or an SN name #4 is used in the first authentication request message, and the SN name #4 may be associated with the SN name #2. For example, the SN name #4 and the SN name #2 have a same PLMN ID.

For example, the first authentication request message may be a Nausf_UEAuthentication_GetRequest message.

Optionally, the first authentication request message may further carry a cause value, where the cause value is for notifying the UDM that the primary authentication procedure is initiated in response to the second pending flag that is locally set on the AMF 2. It should be understood that the cause value is optional. To reduce a modification to an existing standard, the cause value may not need to be carried in the first authentication request message. If the first authentication request message carries the cause value, the UDM may learn that the primary authentication procedure is triggered because the second pending flag exists, that is, it indicates that the primary authentication procedure is an authentication procedure initiated by the AMF 2 in response to the previous authentication notification request of the UDM.

Optionally, before sending the first authentication request message, the AMF 2 may further determine whether the primary authentication procedure needs to be triggered due to another factor. If the another factor exists, it indicates that the primary authentication procedure is initiated not only because of the second pending flag. In this case, the first authentication request message may not carry the cause value. If the another factor does not exist, the first authentication request message may carry the cause value.

S518: The AUSF sends a second authentication request message to the UDM. Correspondingly, the UDM receives the second authentication request message from the AUSF. The second authentication request message is for requesting an authentication vector from the UDM, the authentication vector is for performing primary authentication on the UE, and the second authentication request message includes the SUPI of the UE and the SN name #2.

For example, the second authentication request message may be a Nudm_UEAuthentication_GetRequest message.

Optionally, if the cause value is carried in step S517, the cause value may also be carried in step S518.

S519: The UDM determines, based on the SN name #2, that the first primary authentication is requested by the AMF 2.

Optionally, after it is determined that the first primary authentication is requested by the AMF 2, it may be further determined whether the primary authentication needs to be performed on the UE, to be specific, whether the UDM needs to select an authentication method and deliver the authentication vector to the AUSF for the primary authentication on the UE. If the UDM determines that neither the AMF 1 nor the AMF 2 performs authentication on the UE, the UDM performs the following steps S520 to S522. There are a plurality of methods for the UDM to determine that neither the AMF 1 nor the AMF 2 has performed authentication on the UE. For example, the UDM performs determining by using an explicit authentication pending flag or by using implicit internal determining logic. When the authentication pending flag is used, optionally, if the UDM sets the second authentication pending flag in step S514, after the UDM receives the second authentication request message, the UDM sets the second authentication pending flag corresponding to the AMF 2 to be invalid. For example, after the UDM determines that the authentication request is from the AMF 2 and determines that the AMF 2 performs primary authentication, the UDM cancels the second authentication pending flag. The canceling the second authentication pending flag may be understood as that the second authentication pending flag becomes invalid. If the second authentication pending flag is indicated by a bit, for example, 1 indicates that the second authentication pending flag is valid, and 0 indicates that the second authentication pending flag is invalid, the UDM changes the second authentication pending flag corresponding to the AMF 2 from 1 to 0. Alternatively, if the second authentication pending flag is valid when being present, and is invalid when being absent, the UDM deletes the second authentication pending flag corresponding to the AMF 2.

For example, when the cause value is carried in S519, the UDM needs to determine a specific AMF the authentication request is from. For example, the UDM may determine, based on the SN name #2 carried in the second authentication request message, that the authentication request is from the AMF 2. For example, if the UDM locally stores a correspondence between an SN name and an AMF, the UDM may determine the corresponding AMF 2 based on the SN name #2 carried in the second authentication request message and a locally stored correspondence between the SN name #2 and the AMF 2, to determine that the authentication request is from the AMF 2. For another example, if the UDM locally stores a correspondence between a PLMN ID and an AMF, the UDM determines, based on a PLMN ID #2 in the SN name #2 and a locally stored correspondence between the PLMN ID #2 and the AMF 2, the AMF 2 corresponding to the PLMN ID #2, to determine that the authentication request is from the AMF 2. For still another example, if the UDM locally stores only an ID of an AMF, and does not store an SN name or PLMN ID information that corresponds to the AMF, the UDM may perform determining based on information in the ID of the AMF and information in the SN name #2. For example, if both the ID of the AMF and the SN name #2 include the PLMN ID #2, the UDM may determine, based on the same PLMN ID #2, that the authentication request is from the AMF 2.

Optionally, if the UE accesses the AMF 4, assuming that an authentication request message sent by the AMF 4 carries the SN name #2, the UDM may determine, based on the SN name #2 carried in the authentication request message, that the authentication request is from the AMF 2. Assuming that an authentication request message sent by the AMF 4 carries the SN name #4, the UDM may further determine, based on the SN name #4 carried in the authentication request message, that the authentication request is from the AMF 2. This is because: In steps S516 and S517, the SN name #4 is associated with the SN name #2, in other words, the SN name #4 and the SN name #2 have the same PLMN ID. In this case, after receiving the SN name #4, the UDM may determine the SN name #2 based on the SN name #4, to determine that the authentication request is from the AMF 2. Alternatively, the UDM may determine the corresponding SN name #2 based on the PLMN ID in the SN name #4, to determine that the authentication request is from the AMF 2. Alternatively, the UDM may determine, based on that the PLMN ID in the SN name #4 matches a PLMN ID in the locally stored ID of the AMF 2, that the authentication request is from the AMF 2. Another case is not enumerated herein.

It should be understood that if the UE registers with both the AMF 1 and the AMF 2, the AMF 1 and the AMF 2 both initiate authentication on the UE. In this case, after determining a specific AMF that performs authentication, the UDM may suspend processing on the other AMF, the UDM may reject an authentication request of the other AMF (for example, if the AMF 1 requests, via the AUSF, the UDM to perform a primary authentication procedure, the UDM may reject an authentication request of the AMF 2 after receiving an authentication result sent by the AUSF, or the UDM directly rejects an authentication request of the AMF 2 after receiving an authentication request of the AUSF), or the UDM continues to execute an authentication request of the other AMF (for example, the UDM executes an authentication request of the AMF 2 after receiving an authentication result sent by the AUSF). This is not limited in this application.

S520: The UDM determines that neither the AMF 1 nor the AMF 2 performs authentication on the UE.

Optionally, after determining that the authentication request is from the AMF 2, the UDM further determines whether to perform the primary authentication procedure on the UE. This may also be understood as: The UDM determines whether steps such as selecting the authentication method and generating the authentication vector need to be performed. For example, the UDM may check whether the first authentication pending flag and the second authentication pending flag that correspond to the AMF 1 and the AMF 2 are locally stored. If both the first authentication pending flag and the second authentication pending flag exist, the UDM determines that the primary authentication procedure can be performed. If the second authentication pending flag corresponding to the AMF 2 exists, but the first authentication pending flag corresponding to the AMF 1 does not exist, it indicates that the AMF 1 has performed primary authentication on the UE, and it may be further determined that the primary authentication procedure is not to be performed. If the second authentication pending flag corresponding to the AMF 2 does not exist, but the first authentication pending flag corresponding to the AMF 1 exists, it indicates that the AMF 2 has performed primary authentication on the UE, and it may be further determined that the primary authentication procedure is not to be performed. If it is determined that the primary authentication procedure is to be performed on the UE, the following steps S521 and S522 continue to be performed, and optionally, S523 may be further performed.

Optionally, if the UDM determines, in step S520, that the primary authentication has been performed on the UE or the primary authentication is being performed on the UE, the following steps S521 and S522 do not need to be performed, and optionally, a manner 1 and a manner 2 may continue to be performed.

S521: Perform the primary authentication procedure.

S522: Perform a primary authentication confirmation procedure.

For specific implementations of steps S521 and S522, refer to the related descriptions in the method 200.

S523: The UDM cancels the second authentication pending flag.

Optionally, if an authentication result received by the UDM from the AUSF in step S522 indicates that the primary authentication performed by the AMF 2 on the UE succeeds, the UDM may cancel the previously set second authentication pending flag.

It should be noted that after step S518, that is, after the UDM receives the second authentication request message, if the UDM cancels, deletes, or invalidates the second authentication pending flag corresponding to the AMF 2, step S523 may not be performed. If the AMF 2 does not cancel the second authentication pending flag after step S518, the UDM may cancel the second authentication pending flag in step S523.

According to the foregoing solution, the UDM may directly send a notification message to the AMF 1 when determining in step S519 that the first primary authentication is requested by the AMF 2 or when determining in step S522 that the first primary authentication succeeds, where the notification message is for notifying to cancel or terminate the home network-triggered primary authentication procedure, or is for notifying that the pending flag that is set on the AMF can be canceled. Correspondingly, the AMF 1 may cancel the locally set first pending flag, and does not need to subsequently initiate a primary authentication procedure on the UE. That is, step S531 is performed. Alternatively, when the UDM determines in step S522 that the first primary authentication succeeds, or when the UDM determines in step S522 that the first primary authentication succeeds, the UDM may reject an authentication request of the AMF 1 after waiting for the AMF 1 to initiate an authentication procedure, to avoid repeatedly performing a primary authentication procedure on the UE, and reduce the signaling overheads.

With reference to the manner 1 and the manner 2, the following specifically describes how the UDM notifies, when the UDM determines that the first primary authentication is requested by the AMF 2, the AMF 1 to cancel the pending flag. In the manner 1, the UE accesses the AMF 1 again, the AMF 1 triggers an authentication request because of the locally set first pending flag, and the UDM rejects the authentication request of the AMF 1 when knowing that the AMF 2 performs primary authentication on the UE. In the manner 2, when determining that the first primary authentication is requested by the AMF 2, the UDM directly notifies the AMF 1 that the primary authentication on the UE is being performed or has succeeded, that is, the AMF 1 does not need to trigger authentication on the UE subsequently.

### Manner 1:

S524: The UE sends a second registration request message to the AMF 1. Correspondingly, the AMF 1 receives the second registration request message from the UE.

The second registration request message carries the 5G-GUTI of the UE.

S525: The AMF 1 determines, based on the first pending flag, to trigger a primary authentication procedure, that is, perform the following step S526.

For example, when the AMF 1 locally detects that the AMF 1 has the first pending flag, the AMF 1 triggers the primary authentication procedure, that is, performs the following step S526.

It should be noted that steps S524 and S525 are described for a case in which the UE accesses the network again via the AMF 1 and then the AMF 1 triggers the primary authentication procedure based on the first pending flag. Optionally, the UE may alternatively send a registration request to another AMF, for example, an AMF 3, in an operator network in which the AMF 1 is located, in other words, request to access the network via the AMF 3. It should be understood that when the UE initiates registration to the AMF 3, the AMF 3 obtains the first pending flag from the AMF 1, and triggers a primary authentication procedure on the UE based on the first pending flag. Therefore, the first pending flag is used by the AMF 3. In other words, in this embodiment, after failing to access the network via the AMF 1, the UE may not necessarily access the network again via the AMF 1, but may access the network via the AMF 3 in the operator network in which the AMF 1 is located. For ease of description, an example in which the UE accesses the network via the same AMF, namely, the AMF 1, is used in this embodiment of this application for description. It should be understood that if the UE requests to access the network via the AMF 3 after failing to access the network via the AMF 1, the AMF 3 may obtain a related parameter, for example, the first pending flag, in a context of the UE on the AMF 1, and trigger the primary authentication on the UE. A specific implementation is similar to the manner in which the AMF 1 triggers the primary authentication. Details are not described herein.

S526: The AMF 1 sends a third authentication request message to the AUSF. Correspondingly, the AUSF receives the third authentication request message from the AMF 1. The third authentication request message is for requesting to perform second primary authentication on the UE, the third authentication request message includes the SUPI of the UE and the SN name #1, and the SN name #1 indicates a name of a serving network in which the AMF 1 is located. For the SN name #1, refer to the related descriptions of step S210.

In a possible implementation, the SN name #1 includes the PLMN ID #1 corresponding to the AMF 1.

For example, the third authentication request message may be a Nausf_UEAuthentication_UEAuthentication_GetRequest message.

Optionally, the third authentication request message may further carry a cause value, where the cause value is for notifying the UDM that the primary authentication procedure is initiated in response to the first pending flag locally set on the AMF 1. If the third authentication request message carries the cause value, the UDM may learn that the primary authentication procedure is triggered because the first pending flag exists, that is, it indicates that the primary authentication procedure is an authentication procedure initiated by the AMF 1 in response to the previous authentication notification request of the UDM.

It should be noted that this embodiment is described from a perspective in which the AMF 1 and the AMF 2 send the authentication request messages to the same AUSF. However, in an actual scenario, the AMF 1 and the AMF 2 may select different AUSFs. For ease of understanding and description, the example in which the AMF 1 and the AMF 2 exactly select the same AUSF is used for description. In other words, the AMF 1 and the AMF 2 are not limited to using a same AUSF or different AUSFs in this embodiment of this application.

S527: The AUSF sends a fourth authentication request message to the UDM. Correspondingly, the UDM receives the fourth authentication request message from the AUSF. The fourth authentication request message is for requesting an authentication vector from the UDM, the authentication vector is for performing primary authentication on the UE, and the fourth authentication request message carries the SUPI of the UE and the SN name #1. If a cause value #2 is carried in step S517, the authentication request message #4 further includes the cause value #2.

For example, the authentication request message #4 may be a Nudm_UEAuthentication_UEAuthentication_GetRequest message.

Optionally, if the cause value is carried in step S526, the cause value may also be carried in step S527.

S528: The UDM determines that the AMF 2 has performed authentication on the UE.

Optionally, the UDM may find, through local query, that the second authentication pending flag does not exist, and determine that the AMF 2 has performed authentication on the UE. Alternatively, the UDM determines, based on the authentication result received in step S522, that the AMF 2 has performed authentication on the UE. Alternatively, the UDM may determine, by determining in step S519 that the first authentication is requested by the AMF 2, that the AMF 2 has performed authentication on the UE.

S529: The UDM sends a third authentication response message to the AUSF. Correspondingly, the AUSF receives the third authentication response message from the UDM.

The third authentication response message indicates that the authentication request is rejected. Optionally, the third authentication response message includes a reject cause value, where the reject cause value indicates that the AMF 2 has performed authentication on the UE or the primary authentication on the UE succeeds.

S530: The AUSF sends a fourth authentication response message to the AMF 1. Correspondingly, the AMF 1 receives the fourth authentication response message from the UDM.

The fourth authentication response message indicates that the authentication request of the AMF 1 is rejected. Optionally, the fourth authentication response message includes a reject cause value, where the reject cause value indicates that the AMF 2 has performed authentication on the UE or the primary authentication on the UE succeeds.

S530a: The AMF 1 cancels the first pending flag.

For example, the AMF 1 cancels, based on the received reject cause value, the first pending flag that is set in step S507. For a specific implementation of the cancellation, refer to the related descriptions of step S512a.

### Manner 2:

S531: The UDM sends a second notification message to the AMF 1. Correspondingly, the AMF 1 receives the notification message from the UDM.

The second notification message is for notifying to cancel or terminate the home network-triggered primary authentication procedure, or is for notifying that the pending flag that is set on the AMF can be canceled. In other words, correspondingly, the AMF 1 may cancel the first pending flag that is previously set in step S507.

S532: The AMF 1 cancels the first pending flag.

For example, the AMF 1 cancels, based on the second notification message, the first pending flag that is set in step S507. For a specific implementation of the cancellation, refer to the related descriptions of step S512a.

According to the solution provided in this application, the UDM determines, based on the authentication response message of the AMF 2, that the AMF 2 is capable of performing the primary authentication procedure on the UE, and may send, to the AMF 1 that serves the UE, the notification message for canceling the pending flag, to prevent the AMF 1 from subsequently triggering a re-authentication request for the UE. In addition, the UDM determines the specific AMF that requests the authentication. After learning that the current primary authentication is requested by the AMF 2 that serves the UE, the UDM may directly send, to the AMF 1 that serves the UE and that does not trigger an authentication request, the notification message for canceling the pending flag, to prevent the AMF 1 from subsequently triggering a re-authentication request for the UE. Alternatively, after receiving the authentication request initiated by the AMF 1 that serves the UE, the UDM rejects the authentication request of the AMF 1, to avoid a redundant authentication procedure and reduce the signaling overheads.

The following specifically describes the manner 1 and the manner 2 in the method 500 with reference to FIG. 6A to FIG. 7B. An example in which the UE separately accesses the AMF 1 and the AMF 2 by using a 3GPP access technology and a non-3GPP access technology is used for description. It indicates that the UE is currently served by the AMF 1 and the AMF 2, or the UE may be found by using the AMF 1 and the AMF 2. It can be learned from the method 200 that, in this case, the UDM already stores information about the AMF 1 and the AMF 2 that serve the UE, for example, an ID of the AMF 1 and an ID of the AMF 2. The UDM may determine, based on the IDs of the AMFs, the AMF 1 and the AMF 2 that serve the UE. Further, according to step S330 in the method 300 shown in FIG. 3, the UDM may determine, based on an event or an operator authentication policy, to trigger a primary authentication procedure.

FIG. 6A and FIG. 6B are a schematic flowchart of a communication method 600 according to an embodiment of this application. As shown in FIG. 6A and FIG. 6B, a UDM, an AMF 1, an AMF 2, an AUSF, and UE are used as execution bodies. This implementation mainly describes a case in which after learning that current primary authentication is requested by the AMF 1 that serves the UE, and after receiving an authentication request initiated by the AMF 2 that serves the UE, the UDM rejects the authentication request of the AMF 2. The method includes the following plurality of steps. For a part that is not described in detail, refer to an existing protocol. It should be understood that the related descriptions in the embodiment shown in FIG. 6A and FIG. 6B are also applicable to this implementation. A same or similar technical means may exist in FIG. 4 to FIG. 6B. Content described in the embodiments shown in FIG. 4 to FIG. 5C is not described again.

S601: The UDM sends an authentication notification message #1 to the AMF 1. Correspondingly, the AMF 1 receives the authentication notification message #1 from the UDM.

The authentication notification message #1 includes a SUPI of the UE.

For example, the UDM determines, according to an operator authentication policy, to trigger a primary authentication procedure, and chooses to trigger the primary authentication procedure by using the AMF 1. In this case, the UDM sends the authentication notification message #1 to the AMF 1.

S602: The AMF 1 sends an authentication response message #1 to the UDM, and the UDM receives the authentication response message #1 from the AMF 1.

For example, if the AMF 1 finds that the UE is unreachable, or the AMF 1 does not find the UE, the AMF 1 sends the authentication response message #1 to the UDM, and includes a failure cause value in the authentication response message #1.

S603a: The AMF 1 sets a pending flag #1.

For example, because the AMF 1 is incapable of starting the primary authentication on the UE, the AMF 1 may set the pending flag #1 in a context of the UE. For a specific definition of the pending flag #1, refer to the related descriptions in the method 400.

An execution sequence of steps S602 and S603a is not limited in this embodiment. In other words, the AMF 2 may first perform step S602 and then perform step S603a, or may first perform step S603a and then perform step S602.

For specific implementations of steps S601, S602, and S603a, refer to the related descriptions of steps S340, S360, and S370 in the method 300.

S603b: Optionally, the UDM sets an authentication pending flag #1.

For example, the UDM may determine, based on the failure cause value in the authentication response message #1 of the AMF 1, that the primary authentication on the UE fails to be started, set the authentication pending flag #1, and associate the authentication pending flag #1 with the AMF 1. The authentication pending flag #1 indicates that the UDM has requested the AMF 1 to trigger the primary authentication procedure and the pending flag #1 is set on the AMF 1 because the AMF 1 is incapable of starting the primary authentication procedure on the UE. The setting of the authentication pending flag #1 helps the UDM subsequently determine that the pending flag #1 is set on the AMF 1 associated with the authentication pending flag #1 and the AMF 1 has not performed the primary authentication procedure on the UE.

For a manner of associating the authentication pending flag #1 with the AMF 1, refer to the related descriptions in the method 400. There are a plurality of association manners. For example, the UDM associatively stores the authentication pending flag #1 and an ID of the AMF 1. For another example, the UDM associatively stores the authentication pending flag #1 and an SN name #1 corresponding to an ID of the AMF 1. For another example, the UDM stores the authentication pending flag #1 and a PLMN ID #1 corresponding to an ID of the AMF 1. For another example, the UDM associatively stores the authentication pending flag #1 and at least two parameters in an ID of the AMF 1, an SN name #1, and a PLMN ID #1 corresponding to the AMF 1.

For a representation form of the authentication pending flag #1, refer to the related descriptions in the method 400. This is not specifically limited in this application.

Because the UDM knows that there are two AMFs that serve the UE, when determining that the primary authentication performed by the AMF 1 fails to be started, the UDM may request the other AMF, for example, the AMF 2, that serves the UE, to perform the primary authentication procedure.

S604: The UDM sends an authentication notification message #2 to the AMF 2. Correspondingly, the AMF 2 receives the authentication notification message #2 from the UDM.

The authentication notification message #2 includes the SUPI of the UE.

S605: The AMF 2 sends an authentication response message #2 to the UDM, and the UDM receives the authentication response message #2 from the AMF 2.

S606a: The AMF 2 sets a pending flag #2.

S606b: Optionally, the UDM sets an authentication pending flag #2.

It should be noted that an execution sequence of steps S605 and S606a is not limited in this application.

For specific implementations of steps S604 to S606b, refer to the related descriptions of the steps S601 to S603b. For brevity, details are not described herein again.

It should be understood that because the pending flag #2 is locally set on the AMF 2, when the UE accesses the AMF 2 again, the AMF 2 performs a primary authentication procedure on the UE based on the local pending flag #2. For example, the AMF 1 selects an AUSF, and sends a Nausf_UEAuthentication_Authenticate Request message to the AUSF. For details, refer to the related descriptions of step S210.

S607: The UE sends a registration request message #1 to the AMF 2. Correspondingly, the AMF 2 receives the registration request message #1 from the UE.

The registration request message #1 carries a 5G-GUTI of the UE.

S608: The AMF 2 checks whether the pending flag #2 exists, to determine whether to trigger the primary authentication procedure.

For example, when the AMF 2 locally detects that the AMF 2 has the pending flag #2, the AMF 2 first needs to trigger the primary authentication procedure, that is, perform the following step S609.

S609: The AMF 2 sends an authentication request message #1 to the AUSF. Correspondingly, the AUSF receives the authentication request message #1 from the AMF 2.

The authentication request message #1 is for requesting to perform primary authentication on the UE. The authentication request message #1 carries the SUPI of the UE and an SN name #2. The SN name #2 indicates a name of a serving network in which the AMF 2 is located, where the SN name #2 includes a PLMN ID #2 corresponding to the AMF 2. For the SN name #2, refer to the related descriptions of step S210.

For example, the SN name #2 includes the PLMN ID corresponding to the AMF 2.

For example, the authentication request message #1 may be a Nausf_UEAuthentication_UEAuthentication_GetRequest message.

Optionally, the authentication request message #1 may further carry a cause value #1, where the cause value #1 is for notifying the UDM that the primary authentication procedure is initiated in response to the pending flag #2 that is locally set on the AMF 2. It should be understood that the cause value #1 is optional. To reduce a modification to an existing standard, the cause value #1 may not need to be carried in the authentication request message #1. If the authentication request message #1 carries the cause value #1, the UDM may learn that the primary authentication procedure is triggered because the pending flag #2 exists, that is, it indicates that the primary authentication procedure is an authentication procedure initiated by the AMF 2 in response to the previous authentication notification request of the UDM.

Optionally, before sending the authentication request message #1, the AMF 2 may further determine whether the primary authentication procedure needs to be triggered due to another factor. If the another factor exists, it indicates that the primary authentication procedure is initiated not only because of the pending flag #2. In this case, the authentication request message #1 may not carry the cause value #1. If the another factor does not exist, the authentication request message #1 may carry the cause value #1.

S610: The AUSF sends an authentication request message #2 to the UDM. Correspondingly, the UDM receives the authentication request message #2 from the AUSF.

The authentication request message #2 is for requesting an authentication vector from the UDM, and the authentication vector is for performing primary authentication on the UE. The authentication request message #2 carries the SUPI of the UE and the SN name #2. If the cause value #1 is carried in step S609, the authentication request message #2 further includes the cause value #1.

For example, the authentication request message #2 may be a Nudm_UEAuthentication_UEAuthentication_GetRequest message.

S611: The UDM determines, based on the SN name #2, that the authentication request is from the AMF 2.

For example, when the cause value #1 is carried in S610, the UDM needs to determine a specific AMF the authentication request is from. For a specific implementation, refer to the related descriptions in the method 500.

Optionally, after determining the specific AMF, for example, the AMF 2, the authentication request is from, the UDM further determines whether to perform the primary authentication procedure on the UE. This may also be understood as: The UDM determines whether steps such as selecting an authentication method and generating the authentication vector need to be performed. For a specific implementation, refer to the related descriptions in the method 500. If it is determined to perform the primary authentication procedure on the UE, the following step S612 continues to be performed. If it is determined not to perform the primary authentication procedure on the UE, the following step S620 may be performed.

Optionally, if an authentication pending flag is set on the UDM, after the UDM receives the authentication request message, the UDM sets the authentication pending flag corresponding to the AMF to be invalid. For example, after the UDM determines that the authentication request is from the AMF 2 and determines that the AMF 2 performs primary authentication, the UDM cancels the authentication pending flag #2. The canceling the authentication pending flag #2 may be understood as that the authentication pending flag #2 becomes invalid. If the authentication pending flag #2 is indicated by a bit, for example, 1 indicates that the authentication pending flag #2 is valid, and 0 indicates that the authentication pending flag #2 is invalid, the UDM changes the authentication pending flag #2 for the AMF 2 from 1 to 0. Alternatively, if the authentication pending flag #2 is valid when being present, and is invalid when being absent, the UDM deletes the authentication pending flag #2 for the AMF 2.

It should be understood that if the UE registers with both the AMF 1 and the AMF 2, the AMF 1 and the AMF 2 both initiate authentication on the UE. In this case, after determining a specific AMF that performs authentication, the UDM may suspend processing on the other AMF, the UDM may reject an authentication request of the other AMF (for example, if the AMF 1 requests, via the AUSF, the UDM to perform a primary authentication procedure, the UDM may reject an authentication request of the AMF 2 after receiving an authentication result sent by the AUSF, or the UDM directly rejects an authentication request of the AMF 2 after receiving an authentication request of the AUSF), or the UDM continues to execute an authentication request of the other AMF (for example, the UDM executes an authentication request of the AMF 2 after receiving an authentication result sent by the AUSF). This is not limited in this application.

S612: Perform the primary authentication procedure.

S613: Perform a primary authentication confirmation procedure.

For specific implementations of steps S612 and S613, refer to the related descriptions in the method 200.

S614: Optionally, the UDM cancels the authentication pending flag #2.

For example, if the UDM cancels the authentication pending flag #2 in step S611, this step does not need to be performed. If the UDM does not cancel the authentication pending flag #2 in step S611, this step may be performed.

Optionally, step S611 may not be performed. To be specific, in step S614, the UDM may determine the specific AMF that triggers the authentication procedure. For example, the UDM may determine, based on a serving network name in an authentication response in step S613, that the authentication procedure is triggered by the AMF 2. For a specific determining method, refer to the related descriptions of step S611.

It should be understood that because the pending flag #2 is locally set on the AMF 2, when the UE accesses the AMF 2 again, the AMF 2 requests, via the AUSF based on the local pending flag #2, the UDM to trigger the primary authentication procedure on the UE. Optionally, the AMF 1 and the AMF 2 send the authentication request messages to the same AUSF. However, in an actual scenario, the AMF 1 and the AMF 2 may select different AUSFs. For ease of understanding and description, the example in which the AMF 1 and the AMF 2 exactly select the same AUSF is used for description. In other words, the AMF 1 and the AMF 2 are not limited to using a same AUSF or different AUSFs in this embodiment of this application.

S615: The UE sends a registration request message #2 to the AMF 1. Correspondingly, the AMF 1 receives the registration request message #2 from the UE.

The registration request message #2 carries the 5G-GUTI of the UE.

S616: The AMF 1 checks whether the pending flag #1 exists, to determine whether to trigger a primary authentication procedure.

For example, when the AMF 1 locally detects that the AMF 1 has the pending flag #1, the AMF 1 first needs to trigger the primary authentication procedure, that is, perform the following step S617.

S617: The AMF 1 sends an authentication request message #3 to the AUSF. Correspondingly, the AUSF receives the authentication request message #3 from the AMF 1.

The authentication request message #3 is for requesting to perform primary authentication on the UE. The authentication request message #3 carries the SUPI of the UE and the SN name #1. The SN name #1 indicates a name of a serving network in which the AMF 1 is located, where the SN name #1 includes the PLMN ID #1 corresponding to the AMF 1. For the SN name #1, refer to the related descriptions of step S210.

For example, the authentication request message #3 may be a Nausf_UEAuthentication_GetRequest message.

Optionally, the authentication request message #3 may further carry a cause value #2, where the cause value #2 is for notifying the UDM that the primary authentication procedure is initiated in response to the pending flag #1 locally set on the AMF 1. If the authentication request message #3 carries the cause value #2, the UDM may learn that the primary authentication procedure is triggered because the pending flag #1 exists, that is, it indicates that the primary authentication procedure is an authentication procedure initiated by the AMF 1 in response to the previous authentication notification request of the UDM. For a specific definition, refer to the related descriptions of step S609.

S618: The AUSF sends an authentication request message #4 to the UDM. Correspondingly, the UDM receives the authentication request message #4 from the AUSF.

The authentication request message #4 is for requesting an authentication vector from the UDM, the authentication vector is for performing primary authentication on the UE, and the authentication request message #4 carries the SUPI of the UE and the SN name #1. If the cause value #2 is carried in step S617, the authentication request message #4 further includes the cause value #2.

For example, the authentication request message #4 may be a Nudm_UEAuthentication_GetRequest message.

S619: The UDM determines that the primary authentication performed by the AMF 2 succeeds.

Optionally, when a cause value can be carried, and the cause value #2 is carried in step S618, the UDM determines that the authentication procedure is triggered by the pending flag #1, and then the UDM checks whether the authentication has been performed, for example, determines, according to the related descriptions of step S611 or step S614, whether the authentication has been performed. When the UDM determines that the authentication has been performed, to avoid repeated authentication, the UDM may reject a subsequent authentication procedure, and send a reject cause value #3 in a subsequent authentication request procedure. When the UDM determines, for example, according to the related descriptions of step S611, that the authentication has not been performed, the authentication procedure may continue to be performed, for example, step S612 is performed.

Optionally, when an authentication cause value can be carried, and the cause value #2 is not carried in step S618, the UDM continues to perform a subsequent authentication procedure. Optionally, the UDM may further cancel a related mark for the AMF 1, for example, the authentication pending flag #1 that is set in step S603b.

Optionally, when a cause value cannot be carried, the UDM may have at least two types of processing logic. For example, the UDM may continue to perform the authentication procedure according to related descriptions in an existing protocol. For another example, when the UDM determines whether an authentication procedure has been requested but the request fails (for example, the pending flag #1 is recorded on the AMF 1), the UDM determines whether authentication has been performed (for example, there is no pending flag #2 on the AMF 2). If the authentication has been performed, the UDM may first reject the current authentication procedure, and reply the reject cause value #3. In addition, the UDM cancels the authentication pending flag. This means that the UDM has not requested authentication on the UE from the AMF. In this case, any other authentication request from the AMF needs to be processed.

S620: The UDM sends an authentication response message #3 to the AUSF. Correspondingly, the AUSF receives the authentication response message #3 from the UDM.

The authentication response message #3 carries the reject cause value #3, where the reject cause value #3 indicates that the authentication request of the AMF 1 is rejected. In other words, the AMF 2 has requested to perform primary authentication, and the authentication has succeeded; and the authentication request of the AMF 1 may be terminated.

S621: The AUSF sends an authentication response message #4 to the AMF 1. Correspondingly, the AMF 1 receives the authentication response message #4 from the AUSF.

The authentication response message #4 carries the failure cause value #3.

S622: The AMF 1 cancels the pending flag #1.

For example, if an authentication cause value can be carried, after receiving the failure cause value #3, the AMF 1 cancels the pending flag #1 based on the reject cause value #3, and continues to serve the UE.

According to the solution provided in this application, the UDM determines a specific AMF that requests the authentication, so that after learning that the current primary authentication is requested by the AMF 2 that serves the UE, and after receiving the authentication request initiated by the AMF 1 that serves the UE, the UDM rejects the authentication request of the AMF 1, to avoid a redundant authentication procedure and reduce signaling overheads.

FIG. 7A and FIG. 7B are a schematic flowchart of a communication method 700 according to an embodiment of this application. A UDM, an AMF 1, an AMF 2, an AUSF, and UE are used as execution bodies. This implementation mainly describes a case in which after learning that current primary authentication is requested by the AMF 1 that serves the UE, the UDM sends, based on locally stored information about a plurality of AMFs that serve the UE, a pending cancellation flag to the AMF 2 that does not trigger an authentication request, to avoid triggering a redundant authentication procedure. The method includes the following plurality of steps. For a part that is not described in detail, refer to an existing protocol. It should be understood that the related descriptions in the embodiments shown in FIG. 4 to FIG. 6B are also applicable to this implementation. A same or similar technical means may exist in FIG. 4 to FIG. 7B. Content described in the embodiments shown in FIG. 7A and FIG. 7B, and FIG. 4 to FIG. 6B is not described again.

S701: The UDM sends an authentication notification message #1 to the AMF 1. Correspondingly, the AMF 1 receives the authentication notification message #1 from the UDM.

S702: The AMF 1 sends an authentication response message #1 to the UDM, and the UDM receives the authentication response message #1 from the AMF 1.

S703a: The AMF 1 sets a pending flag #1.

S703b: Optionally, the UDM sets an authentication pending flag #1.

S704: The UDM sends an authentication notification message #2 to the AMF 2. Correspondingly, the AMF 2 receives the authentication notification message #2 from the UDM.

S705: The AMF 2 sends an authentication response message #2 to the UDM, and the UDM receives the authentication response message #2 from the AMF 2.

S706a: The AMF 2 sets a pending flag #2.

S706b: Optionally, the UDM sets an authentication pending flag #2.

S707: The UE sends a registration request message #1 to the AMF 2. Correspondingly, the AMF 2 receives the registration request message #1 from the UE.

S708: The AMF 2 checks whether the pending flag #1 exists, to determine whether to trigger a primary authentication procedure.

S709: The AMF 2 sends an authentication request message #1 to the AUSF. Correspondingly, the AUSF receives the authentication request message #1 from the AMF 2.

S710: The AUSF sends an authentication request message #2 to the UDM. Correspondingly, the UDM receives the authentication request message #2 from the AUSF.

S711: The UDM determines, based on an SN name #2, that the authentication request is from the AMF 2.

S712: Perform the primary authentication procedure.

S713: Perform a primary authentication confirmation procedure.

S714: Optionally, the UDM cancels the authentication pending flag #2.

For specific implementations of steps S701 to S714, refer to the related descriptions of steps S601 to S614 in the method 600. For brevity, details are not described herein again.

According to the foregoing implementation, the UDM learns that the AMF 2 successfully triggers the primary authentication on the UE. In this case, to avoid a subsequent redundant authentication procedure, the UDM may directly send, to the AMF 1 that serves the UE, a notification for canceling the pending flag #1, that is, perform step S715.

S715: The UDM sends a notification message to the AMF 1. Correspondingly, the AMF 1 receives the notification message from the UDM.

The notification message is for notifying the AMF 1 to cancel the pending flag #1, so that the AMF 1 may not trigger primary authentication on the UE if the UE subsequently accesses the AMF 1 again. The notification message includes a SUPI of the UE.

For example, if the UDM determines that the authentication is requested by the AMF 2, the UDM sends the notification message to the AMF 1 that serves the UE, where the notification message is for notifying the AMF 1 to cancel the pending flag #1.

S716: The AMF 1 cancels the pending flag #1.

For example, the AMF 1 cancels the pending flag #1 based on the received notification message.

S717: The AMF 1 sends a response message to the UDM. Correspondingly, the AMF 1 receives the response message from the UDM.

It should be noted that, in an example, step S715 may occur after step S711. To be specific, after learning that the primary authentication on the UE occurs, the UDM may send a cancellation (for example, deletion or reset) notification to the AMF 1 that serves the UE. In another example, after determining in step S714 that the authentication performed by the AMF 2 succeeds, the UDM may send a cancellation (for example, deletion or reset) notification to the AMF 1 that serves the UE. This is not limited in this application.

According to the solution provided in this application, the UDM determines the specific AMF that requests the authentication, so that after learning that the current primary authentication is requested by the AMF 2 that serves the UE, the UDM directly sends a pending cancellation flag to the AMF 1 that serves the UE and that does not trigger an authentication request, to avoid triggering a redundant authentication procedure, and reduce signaling overheads.

The foregoing describes in detail embodiments of the communication method in this application with reference to FIG. 1 to FIG. 6B. The following describes in detail embodiments of the communication apparatus in this application with reference to FIG. 7A to FIG. 9. It should be understood that descriptions of the apparatus embodiments correspond to the descriptions of the method embodiments, and therefore for a part that is not described in detail, refer to the foregoing method embodiments.

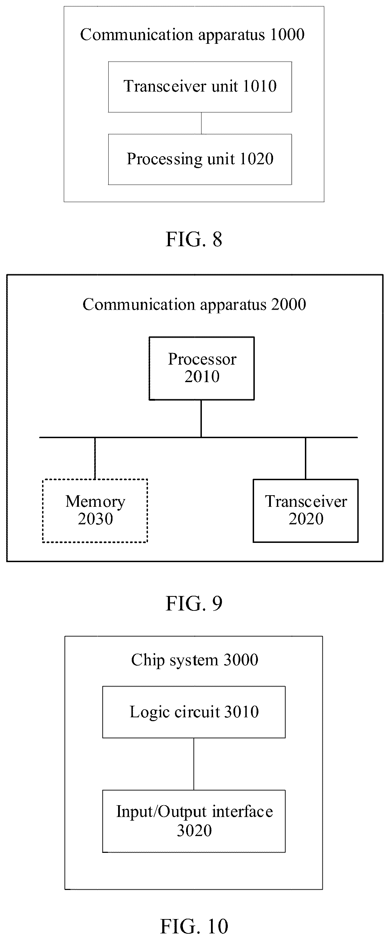

FIG. 8 is a diagram of a structure of a communication apparatus 1000 according to an embodiment of this application. As shown in FIG. 8, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface.

In a possible design, the apparatus 1000 may implement steps or procedures correspondingly performed by the home network element in the foregoing method embodiments. The processing unit 1020 is configured to perform a processing-related operation of the home network element in the foregoing method embodiments, and the transceiver unit 1010 is configured to perform a receiving/sending-related operation of the home network element in the foregoing method embodiments.

For example, the processing unit 1020 is used for the home network element to: when a terminal device registers with a network separately via a first mobility management function network element and a second mobility management function network element, store an identifier of the first mobility management function network element and an identifier of the second mobility management function network element. The transceiver unit 1010 is used for the home network element to send a first authentication notification message to the first mobility management function network element when it is determined that primary authentication needs to be performed on the terminal device, where the first authentication notification message is for requesting to trigger the primary authentication on the terminal device. The transceiver unit 1010 is further used for the home network element to receive a first authentication response message from the first mobility management function network element, where the first authentication response message indicates that the first mobility management function network element is incapable of starting the primary authentication on the terminal device. The transceiver unit 1010 is further used for the home network element to send a second authentication notification message to the second mobility management function network element in response to the first authentication response message, where the second authentication notification message is for requesting to trigger the primary authentication on the terminal device. The transceiver unit 1010 is further used for the home network element to receive a second authentication response message from the second mobility management function network element. The transceiver unit 1010 is further used for the home network element to send a first notification message to the first mobility management function network element when it is determined, based on the second authentication response message, that the second mobility management function network element is capable of starting the primary authentication on the terminal device, where the first notification message indicates not to perform primary authentication on the terminal device when the terminal device registers with the network again via the first mobility management function network element.

In another possible design, the apparatus 1000 may implement steps or procedures correspondingly performed by the first mobility management function network element in the foregoing method embodiments. The transceiver unit 1010 is configured to perform a receiving/sending-related operation of the first mobility management function network element in the foregoing method embodiments, and the processing unit 1020 is configured to perform a processing-related operation of the first mobility management function network element in the foregoing method embodiments.

It should be understood that the apparatus 1000 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described function. In an optional example, a person skilled in the art may understand that, the apparatus 1000 may be specifically a transmitting end in the foregoing embodiments, and may be configured to perform procedures and/or steps corresponding to the transmitting end in the foregoing method embodiments. Alternatively, the apparatus 2000 may be specifically a receiving end in the foregoing embodiments, and may be configured to perform procedures and/or steps corresponding to the receiving end in the foregoing method embodiments. To avoid repetition, details are not described herein again.

The apparatus 1000 in the foregoing solutions has a function of implementing corresponding steps performed by the transmitting end in the foregoing methods, or the apparatus 1000 in the foregoing solutions has a function of implementing corresponding steps performed by the receiving end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a receiving/sending operation and a related processing operation in the method embodiments.

In addition, the transceiver unit may alternatively be a transceiver circuit (for example, may include a receiver circuit and a transmitter circuit), and the processing unit may be a processing circuit. In this embodiment of this application, the apparatus in FIG. 8 may be the receiving end or the transmitting end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 is a diagram of a structure of a communication apparatus 2000 according to an embodiment of this application. As shown in FIG. 9, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030, the processor 2010, and the transceiver 2020 communicate with each other through an internal connection path. The memory 2030 is configured to store instructions, and the processor 2010 may execute the instructions stored in the memory 2030.

In a possible implementation, the apparatus 2000 is configured to implement procedures and steps corresponding to the home network element in the foregoing method embodiments.

In another possible implementation, the apparatus 2000 is configured to implement procedures and steps corresponding to the first mobility management function network element in the foregoing method embodiments.

It should be understood that the apparatus 2000 may be specifically a transmitting end or a receiving end in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmitting end or the receiving end in the foregoing method embodiments.

Optionally, the memory 2030 may include a read-only memory and a random access memory, and provide instructions and data for the processor. A part of the memory may further include a nonvolatile random access memory. For example, the memory may further store information about a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmitting end or the receiving end.

In an implementation process, the steps in the foregoing methods may be implemented by using a hardware integrated logic circuit in the processor, or by using instructions in a software form. The steps in the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

It should be noted that, the processor in this embodiment of this application may be an integrated circuit chip, and has a signal processing capability. In an implementation process, the steps in the foregoing method embodiments may be implemented by using a hardware integrated logic circuit in the processor, or by using instructions in a software form. The processor may be a general-purpose processor, a digital signal processor, an application-specific integrated circuit, a field programmable gate array or another programmable logic device, a discrete gate or transistor logic device, or a discrete hardware component. The processor in this embodiment of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these memories and any memory of another appropriate type.

FIG. 10 is a diagram of a structure of a chip system 3000 according to an embodiment of this application. As shown in FIG. 10, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the home network element in the foregoing method embodiments.

In a solution, the chip system 3000 is configured to implement operations performed by the first mobility management function network element in the foregoing method embodiments.

An embodiment of this application further provides a computer-readable storage medium, where the computer-readable storage medium stores computer instructions for implement the method performed by the home network element or the first mobility management function network element in the foregoing method embodiments.

An embodiment of this application further provides a computer program product, including computer program code or instructions. When the computer program code or the instructions are run on a computer, the computer is enabled to implement the method performed by the home network element or the first mobility management function network element in the foregoing method embodiments.

An embodiment of this application further provides a communication system, including the foregoing home network element and the foregoing first mobility management function network element.

For explanations and beneficial effects of related content in any one of the apparatuses provided above, refer to the corresponding method embodiment provided above. Details are not described herein again.

For ease of understanding the foregoing embodiments provided in this application, the following descriptions are provided.
(1) In this application, unless otherwise stated or there is a logic conflict, terms and/or descriptions in different embodiments are consistent and may be mutually referenced, and technical features in different embodiments may be combined into a new embodiment based on an internal logical relationship thereof.
(2) In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally represents an "or" relationship between associated objects. "At least one of the following items (pieces)" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely for distinguishing for ease of description, and are not intended to limit the scope of embodiments of this application, for example, are for distinguishing between different messages but not for describing a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case, and do not limit time, and the device is not required to perform a determining action during implementation. This does not mean that there is another limitation.
(5) In this application, "indicate" may include "directly indicate" and "indirectly indicate". When a piece of indication information indicates A, the indication information may directly indicate A or indirectly indicate A, but this does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefinition" may include definition in advance, for example, definition in a protocol. "Pre-configuration" may be implemented by pre-storing corresponding code or a corresponding table in a device, or may be implemented in another manner that may indicate related information. A specific implementation thereof is not limited in this application.

(7) In this application, "communication" may also be described as "data transmission", "information transmission", "data processing", or the like. "Transmission" includes "sending" and "receiving".

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
when a terminal device registers with a network separately via a first mobility management function network element and a second mobility management function network element, storing an identifier of the first mobility management function network element and an identifier of the second mobility management function network element;
sending a first authentication notification message to the first mobility management function network element when determining that primary authentication needs to be performed on the terminal device, wherein the first authentication notification message is for requesting to trigger the primary authentication on the terminal device;
receiving a first authentication response message from the first mobility management function network element, wherein the first authentication response message indicates that the first mobility management function network element is incapable of starting the primary authentication on the terminal device;
sending a second authentication notification message to the second mobility management function network element in response to the first authentication response message, wherein the second authentication notification message is for requesting to trigger the primary authentication on the terminal device;
receiving a second authentication response message from the second mobility management function network element; and
sending a first notification message to the first mobility management function network element when determining, based on the second authentication response message, that the second mobility management function network element is capable of starting the primary authentication on the terminal device, wherein the first notification message indicates the first mobility management function network element to cancel a first pending flag, and the first pending flag indicates that the primary authentication on the terminal device needs to be triggered.

2. The method according to claim 1, wherein the first authentication response message comprises a first cause value, and the first cause value indicates that the first mobility management function network element is incapable of starting the primary authentication on the terminal device.

3. The method according to claim 1 or 2, wherein the method further comprises:
setting a first authentication pending flag in response to the first authentication response message, wherein the first authentication pending flag indicates that the first pending flag is set on the first mobility management function network element; and
the sending the first notification message to the first mobility management function network element comprises:
sending the first notification message to the first mobility management function network element based on the first authentication pending flag.

4. The method according to claim 3, wherein after the sending the first notification message to the first mobility management function network element, the method further comprises:
deleting the first authentication pending flag.

5. The method according to claim 1 or 2, wherein the sending the second authentication notification message to the second mobility management function network element in response to the first authentication response message comprises:
sending the second authentication notification message to the second mobility management function network element based on the identifier of the second mobility management function network element in response to the first authentication response message.

6. The method according to any one of claims 1 to 5, wherein the method further comprises:
when either of the following is met, determining that the second mobility management function network element is capable of starting the primary authentication on the terminal:
the second authentication response message carries an acknowledgment message for the second authentication notification message; or
the second authentication response message does not carry a second cause value, wherein the second cause value indicates that the second mobility management function network element is incapable of starting the primary authentication on the terminal device.

7. The method according to any one of claims 1 to 6, wherein
when it is determined, based on the second authentication response message, that the primary authentication on the terminal device is incapable of being started, and a third mobility management function network element subsequently starts the primary authentication on the terminal device, performing either of the following operations for a fourth mobility management function network element:
notifying the fourth mobility management function network element to cancel a pending flag; or
rejecting a primary authentication request initiated by the fourth mobility management function network element, wherein
the third mobility management function network element is one of the first mobility management function network element and the second mobility management function network element, and the fourth mobility management function network element is the other of the first mobility management function network element and the second mobility management function network element other than the third mobility management function network element.

8. The method according to claim 7, wherein the method further comprises:
receiving a first request message triggered by the third mobility management function network element, wherein the first request message is for requesting to perform primary authentication on the terminal device, the first request message comprises a second serving network name, and the second serving network name indicates a serving network in which the third mobility management function network element is located; and
determining, based on the second serving network name, that the operation needs to be performed for the fourth mobility management function network element.

9. The method according to claim 8, wherein the determining, based on the second serving network name, that the operation needs to be performed for the fourth mobility management function network element comprises:
determining, based on the second serving network name, the stored identifier of the first mobility management function network element, and the stored identifier of the second mobility management function network element, that the operation needs to be performed for the fourth mobility management function network element; or
determining, based on the second serving network name, the set first authentication pending flag, and a set second authentication pending flag, that the operation needs to be performed for the fourth mobility management function network element, wherein the first authentication pending flag indicates that the first pending flag is set on the first mobility management function network element, the second authentication pending flag indicates that a second pending flag is set on the second mobility management function network element, and the second pending flag indicates that the primary authentication on the terminal device needs to be triggered.

10. The method according to claim 8 or 9, wherein before the determining that the operation needs to be performed for the fourth mobility management function network element, the method further comprises:
determining to perform primary authentication on the terminal device;
sending an authentication vector to the third mobility management function network element, wherein the authentication vector is for performing primary authentication on the terminal device; and
receiving an authentication result for the terminal device; and
the determining that the operation needs to be performed for the fourth mobility management function network element comprises:
when the authentication result indicates that the authentication on the terminal device succeeds, determining that the operation needs to be performed for the fourth mobility management function network element.

11. The method according to claim 10, wherein before the receiving the first request message triggered by the third mobility management function network element, the method further comprises:
setting the first authentication pending flag and the second authentication pending flag when determining that the first mobility management function network element and the second mobility management function network element are incapable of starting the primary authentication on the terminal device; and
the determining to perform primary authentication on the terminal device comprises:
determining, based on the stored first authentication pending flag and the stored second authentication pending flag, to perform primary authentication on the terminal device.

12. The method according to any one of claims 8 to 11, wherein before the determining, based on the second serving network name, that the operation needs to be performed for the fourth mobility management function network element, the method further comprises:
determining, based on the second serving network name and a stored correspondence between the second serving network name and the third mobility management function network element, that the first request message is triggered by the third mobility management function network element; or
determining, based on an identifier that is of a public land mobile network and that is comprised in the second serving network name and a stored correspondence between the identifier of the public land mobile network and the third mobility management function network element, that the first request message is triggered by the third mobility management function network element.

13. The method according to any one of claims 8 to 12, wherein before the determining, based on the second serving network name, that the operation needs to be performed for the fourth mobility management function network element, the method further comprises:
receiving a second request message triggered by the fourth mobility management function network element, wherein the second request message is for requesting to perform primary authentication on the terminal device, the second request message comprises a third serving network name, and the third serving network name indicates a serving network in which the fourth mobility management function network element is located.

14. A communication method, wherein the method comprises:
when a terminal device registers with a network separately via a first mobility management function network element and a second mobility management function network element, storing, by a home network element, an identifier of the first mobility management function network element and an identifier of the second mobility management function network element;
sending, by the home network element, a first authentication notification message to the first mobility management function network element when determining that primary authentication needs to be performed on the terminal device; and receiving, by the first mobility management function network element, the first authentication notification message from the home network element, wherein the first authentication notification message is for requesting to trigger the primary authentication on the terminal device;
sending, by the first mobility management function network element, a first authentication response message to the home network element when determining that the primary authentication on the terminal device is incapable of being started; and receiving, by the home network element, the first authentication response message from the first mobility management function network element, wherein the first authentication response message indicates that the first mobility management function network element is incapable of starting the primary authentication on the terminal device;
sending, by the home network element, a second authentication notification message to the second mobility management function network element in response to the first authentication response message; and receiving, by the second mobility management function network element, the second authentication notification message from the home network element, wherein the second authentication notification message is for requesting to trigger the primary authentication on the terminal device;
sending, by the home network element, a second authentication response message to the second mobility management function network element; and receiving, by the home network element, the second authentication response message from the second mobility management function network element;
sending, by the home network element, a first notification message to the first mobility management function network element when determining, based on the second authentication response message, that the second mobility management function network element is capable of starting the primary authentication on the terminal device; and receiving, by the first mobility management function network element, the first notification message from the home network element, wherein the first notification message indicates the first mobility management function network element to delete a first pending flag, and the first pending flag indicates that the primary authentication on the terminal device needs to be triggered; and
deleting, by the first mobility management function network element, the first pending flag based on the first notification message.

15. The method according to claim 14, wherein the first authentication response message comprises a first cause value, and the first cause value indicates that the first mobility management function network element is incapable of starting the primary authentication on the terminal device.

16. The method according to claim 14 or 15, wherein the method further comprises:
setting, by the home network element, a first authentication pending flag in response to the first authentication response message, wherein the first authentication pending flag indicates that the first pending flag is set on the first mobility management function network element; and
the sending, by the home network element, the first notification message to the first mobility management function network element comprises:
sending, by the home network element, the first notification message to the first mobility management function network element based on the first authentication pending flag.

17. The method according to claim 16, wherein the method further comprises:
deleting, by the home network element, the first authentication pending flag when determining that the primary authentication performed by the second mobility management function network element on the terminal device succeeds.

18. The method according to any one of claims 14 to 17, wherein
when it is determined, based on the second authentication response message, that the primary authentication on the terminal device is incapable of being started, and one of the first mobility management function network element and the second mobility management function network element subsequently starts the primary authentication on the terminal device, performing, by the home network element, either of the following operations for the other of the first mobility management function network element and the second mobility management function network element:
notifying, by the home network element, the other of the first mobility management function network element and the second mobility management function network element to cancel a pending flag; or
rejecting, by the home network element, a primary authentication request initiated by the other of the first mobility management function network element and the second mobility management function network element.

19. The method according to claim 18, wherein the method further comprises:
sending, by the third mobility management function network element, a first request message to the home network element; and receiving, by the home network element, the first request message triggered by the third mobility management function network element, wherein the first request message is for requesting to perform primary authentication on the terminal device, the first request message comprises a second serving network name, and the second serving network name indicates a serving network in which the third mobility management function network element is located; and
determining, by the home network element based on the second serving network name, that the operation needs to be performed for the fourth mobility management function network element.

20. The method according to claim 19, wherein the determining, by the home network element based on the second serving network name, that the operation needs to be performed for the fourth mobility management function network element comprises:
determining, by the home network element based on the second serving network name, the stored identifier of the first mobility management function network element, and the stored identifier of the second mobility management function network element, that the operation needs to be performed for the fourth mobility management function network element; or
determining, by the home network element based on the second serving network name, the set first authentication pending flag, and a set second authentication pending flag, that the operation needs to be performed for the fourth mobility management function network element, wherein the first authentication pending flag indicates that the first pending flag is set on the first mobility management function network element, the second authentication pending flag indicates that a second pending flag is set on the second mobility management function network element, and the second pending flag indicates that the primary authentication on the terminal device needs to be triggered.

21. The method according to claim 19 or 20, wherein before the determining that the operation needs to be performed for the fourth mobility management function network element, the method further comprises:
determining, by the home network element, to perform primary authentication on the terminal device;
sending, by the home network element, an authentication vector to the third mobility management function network element; and receiving, by the third mobility management function network element, the authentication vector from the home network element, wherein the authentication vector is for performing primary authentication on the terminal device; and
sending, by the third mobility management function network element, an authentication result for the terminal device to the home network element; and receiving, by the home network element, the authentication result for the terminal device from the third mobility management function network element; and
the determining that the operation needs to be performed for the fourth mobility management function network element comprises:
when the authentication result indicates that the primary authentication on the terminal device succeeds, determining, by the home network element, that the operation needs to be performed for the fourth mobility management function network element.

22. The method according to claim 20, wherein before the receiving, by the home network element, the first request message triggered by the third mobility management function network element, the method further comprises:
setting, by the home network element, the first authentication pending flag and the second authentication pending flag when determining that the first mobility management function network element and the second mobility management function network element are incapable of starting the primary authentication on the terminal device; and
the determining, by the home network element, to perform primary authentication on the terminal device comprises:
determining, by the home network element based on the stored first authentication pending flag and the stored second authentication pending flag, to perform primary authentication on the terminal device.

23. The method according to any one of claims 19 to 22, wherein before the determining, by the home network element based on the second serving network name, that the operation needs to be performed for the fourth mobility management function network element, the method further comprises:
determining, by the home network element based on the second serving network name and a stored correspondence between the second serving network name and the third mobility management function network element, that the first request message is triggered by the third mobility management function network element; or
determining, by the home network element based on an identifier that is of a public land mobile network and that is comprised in the second serving network name and a stored correspondence between the identifier of the public land mobile network and the third mobility management function network element, that the first request message is triggered by the third mobility management function network element.

24. The method according to any one of claims 19 to 23, wherein before the determining, by the home network element based on the second serving network name, that the operation needs to be performed for the fourth mobility management function network element, the method further comprises:
receiving, by the home network element, a second request message from the fourth mobility management function network element, wherein the second request message is for requesting to perform primary authentication on the terminal device, the second request message comprises a third serving network name, and the third serving network name indicates a serving network in which the fourth mobility management function network element is located.

25. A communication apparatus, comprising one or more functional modules, wherein the one or more functional modules are configured to perform the method according to any one of claims 1 to 13.

26. A communication apparatus, comprising a processor, wherein the processor is coupled to a memory, and the processor is configured to execute a computer program stored in the memory, to enable the apparatus to perform the method according to any one of claims 1 to 13.

27. A computer-readable storage medium, wherein the computer-readable storage medium stores a computer program; and when the computer program runs on a computer, the computer is enabled to perform the method according to any one of claims 1 to 13.
